# EUROPEAN PATENT SPECIFICATION

(11) **EP 3 306 077 B1**
(45) Date of publication and mention of the grant of the patent: **10.03.2021**
(21) Application number: 16803346.2
(22) Date of filing: 31.05.2016
(51) Int. Cl.: F03D 7/04, F03D 7/02, F03D 17/00

(54) **DRIVE DEVICE FOR WIND TURBINE, AND DRIVE DEVICE UNIT FOR WIND TURBINE**
ANTRIEBSVORRICHTUNG FÜR EINE WINDTURBINE UND ANTRIEBSVORRICHTUNGSEINHEIT FÜR EINE WINDTURBINE
DISPOSITIF D'ENTRAÎNEMENT POUR ÉOLIENNE, ET UNITÉ DE DISPOSITIF D'ENTRAÎNEMENT POUR ÉOLIENNE

(30) Priority: 02.06.2015 JP 2015112430
(43) Date of publication of application: 11.04.2018
(73) Proprietor: Nabtesco Corporation, Tokyo 102-0093 (JP)
(72) Inventor: OSAKO, Haruna, Fuwa-gun Gifu 503-2121 (JP)
(74) Representative: Grünecker Patent- und Rechtsanwälte PartG mbB
(86) International application number: PCT/JP2016/066061
(87) International publication number: WO 2016/194912

(56) References cited:
- DE-A1-102013 101 012
- JP-A- 2005 113 899
- JP-A- 2011 127 551
- JP-U- S61 200 698
- US-A- 5 035 575
- US-A1- 2009 205 910
- US-A1- 2009 229 926
- US-A1- 2010 109 327
- US-A1- 2012 027 585

## Description

### TECHNICAL FIELD

The present invention relates to a wind turbine driving device and a wind turbine driving device unit.

### BACKGROUND

Conventional wind turbines used as wind power generators include a nacelle installed at the top of a tower and more than one blade. The nacelle is configured to be rotatable on the tower and a generator and the like is disposed thereinside. The blades are installed such that they are rockable in the pitch direction with respect to a rotor which is a main shaft attached to the nacelle. In the wind turbines, a yaw driving device is provided as a wind turbine driving device that drives the nacelle. The yaw driving device drives the nacelle to be rotated relative to the tower so that the nacelle can be turned in accordance with a wind direction. In the wind turbines, a pitch driving device is further provided as a wind turbine driving device that drives the blades. The pitch driving device drives and turns axes of the blades relative to the rotor in the nacelle in order to change pitch angles of the blades.

A wind turbine driving device used as the above-mentioned yaw driving device or the pitch driving device includes an electric motor, a speed reducer, and a pinion. For instance, a geared motor disclosed in Patent Literature 1 may be used as the wind turbine driving device. The speed reducer is coupled to an output shaft of the electric motor in the wind turbine driving device. The pinion is disposed in an output portion coupled to the speed reducer and configured to be meshed with a ring gear that is disposed in the wind turbine. Moreover, a braking mechanism for stopping the output shaft of the electric motor is provided in the wind turbine driving device.

### RELEVANT REFERENCES

### LIST OF RELEVANT PATENT LITERATURE

Patent Literature 1: Japanese Patent Application Publication No. 2007-120510

As mentioned above, the wind turbine driving device used as the yaw driving device or the pitch driving device includes the braking mechanism for stopping the output shaft of the electric motor. The braking mechanism includes a friction plate serving as a brake shoe that generates a braking force by friction. In order to tell whether a currently-used friction plate in the wind turbine driving device installed in the wind turbine needs to be replaced or not, it is necessary to know how much the friction plate has been worn and how much the friction plate still remains. In order to check the amount of wear of the friction plate, a worker has to climb up the tower to disassemble the wind turbine driving device. Another example is known from US2010/109327.

Therefore, it is difficult to easily know the amount of wear of the friction plate in the current wind turbine driving device.

Moreover, there may be malfunctions caused when the friction plate does not work appropriately. More specifically, when friction plates that generate a braking force are stuck together or when the friction plates are not displaced to appropriate positions, malfunctions of the friction plates occurs. When such malfunctions of the friction plates occurs, a braking force generated at the braking mechanism is less likely to be released. When an external force works on the output portion of the wind turbine driving device in which the malfunction of the friction plates occurs, the wind turbine driving device, the ring gear of the wind turbine and so on may be broken. The external force may include, for example, a force generated by wind and a force generated by other wind turbine driving device. In order to prevent the breakage of the wind turbine driving device, and the ring gear of the wind turbine, it is desired to easily detect the malfunction of the friction plates.

In view of the above, one object of the invention is to provide a wind turbine driving device and a wind turbine driving device unit in which the amount of wear of the friction plate can be easily checked and a malfunction of the friction plate can be easily detected.

### SUMMARY

A wind turbine driving device according to an aspect of the invention is a wind turbine driving device for rotationally driving a movable part of a wind turbine. The wind turbine driving device includes: a motor that has an output shaft, a pinion that meshes with a gear provided in the movable part, a speed reducer coupled to the output shaft of the motor and the pinion to reduce a speed of the motor to transmit a reduced driving force to the pinion, a first friction plate coupled to the output shaft of the motor, a second friction plate disposed so as to be contactable with the first friction plate and to generate a braking force to stop rotation of the output shaft by contacting the first friction plate, and a detection unit that detects a distance between the first friction plate and the second friction plate. The detection unit includes a detection target portion and a detector that detects the detection target portion in order to detect the distance between the first friction plate and the second friction plate. One of the detection target portion and the detector is attached to the second friction plate, and the other of the detection target portion and the detector is attached to the motor.

In the wind turbine driving device, the detection target portion may be a permanent magnet and the detector may be a magnetic force sensor.

In the wind turbine driving device, an electromagnet for changing the distance between the first friction plate and the second friction plate by moving the second friction plate may be provided. A state of braking performed by the first friction plate and the second friction plate may be detected based on whether there is a current supplied to the electromagnet and a detection result provided by the detector.

In the wind turbine driving device, the detection target portion and the detector may be provided such that a positional relationship between the detection target portion and the detector is adjustable.

A wind turbine driving device unit according to another aspect of the invention includes a gear for rotationally driving a movable part of a wind turbine and the above-described wind turbine driving device. A plurality of the wind turbine driving devices are provided, the plurality of the wind turbine driving devices mesh with the gear, and the movable part is rotationally driven by synchronously driving the motors of the plurality of the wind turbine driving devices.

In the wind turbine driving device unit, when at least one braking state of one wind turbine drive device indicates an abnormality, the second friction plate in the remaining wind turbine drive devices may contact the corresponding first friction plate to put a brake on the rotation of the output shaft.

In the wind turbine driving device, the detection target portion is a permanent magnet, and the direction of the magnetic flux density from the electromagnet and the direction of the magnetic flux density from the permanent magnet may be opposite to each other.

According to the aspect of the invention, it is possible to easily obtain the wear amount of the friction plates and easily detect a malfunction of a friction plates.

### BRIEF DESCRIPTION OF THE DRAWINGS

Fig. 1 is a perspective view of a wind turbine to which a wind turbine driving device and a wind turbine driving device unit according to one embodiment of the invention are applied.
Fig. 2 is an enlarged sectional view of a portion of a nacelle that is installed rotatably with respect to a tower of the wind turbine of Fig. 1 to illustrate a wind turbine driving device and a wind turbine driving device unit according to one embodiment of the invention.
Fig. 3 is a front elevation of the wind turbine driving device of Fig. 2 including a cutaway thereof.
Fig. 4 is a sectional view schematically illustrating a control unit in the wind turbine driving device unit and a braking mechanism of the wind turbine driving device of Fig. 2.
Fig. 5 is a partially-enlarged sectional view of the braking mechanism of Fig. 4.
Fig. 6 is a partially enlarged sectional view specifically showing a periphery of a detection unit of the wind turbine driving device shown in Fig. 2.
Fig. 7 is a partially enlarged sectional view showing the periphery of a detection unit according to a modification example.
Fig. 8 is a view as seen in the direction of the arrow VIII of Fig. 7.
Fig. 9 is a flow chart of operation of the wind turbine driving device and the wind turbine driving device unit of Fig. 2.
Fig. 10 is a flow chart of a second friction plate operation check process mentioned in the flow chart of Fig. 9.
Fig. 11 is a flow chart of a wear amount detection process mentioned in the flow chart of Fig. 9.
Fig. 12 is a flow chart of a second friction plate operation check process in a modification example.
Fig. 13 is a flow chart of a wear amount detection process in a modification example.
Fig. 14 is a flow chart of a wear amount detection process in a modification example.
Fig. 15 is an enlarged sectional view of a portion where a blade is attached to a rotor of the wind turbine and is provided rockably in a pitch direction to illustrate a wind turbine driving device that serves as a pitch driving device.

### DESCRIPTION OF THE PREFERRED EMBODIMENTS

The embodiments of the invention will now be described with reference to the drawings. The wind turbine driving device according to an embodiment of the invention relates to a wind turbine driving device that drives a nacelle provided rotatably with respect to a tower of the wind turbine or blades that is provided rockably in a pitch direction with respect to a rotor attached to the nacelle, and relates to a wind turbine driving device unit that includes such wind turbine driving devices. The wind turbine driving device according to the embodiment may be used as a yaw driving device that yaw-drives a nacelle to rotate the nacelle relative to a tower of the wind turbine. The wind turbine driving device according to the embodiment may also be used as a pitch driving device that pitch-drives shaft portions of blades to rotate the blades relative to the rotor on the nacelle side.

### Wind Turbine

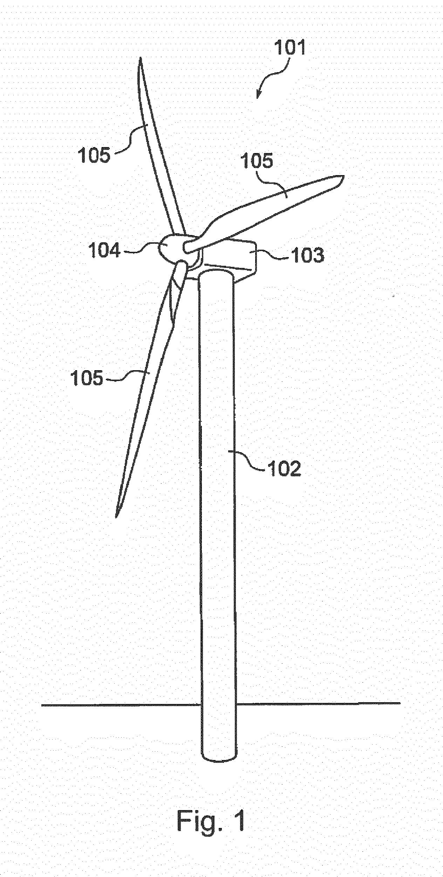

Fig. 1 is a perspective view of a wind turbine 101 to which a wind turbine driving device 1 and a wind turbine driving device unit 10 according to one embodiment of the invention are applied. As shown in Fig. 1, the wind turbine 101 includes, for example, a tower 102, a nacelle 103, a rotor 104 that forms a main shaft portion, blades 105, and so on.

The tower 102 is installed such that it extends vertically upward from the ground. The nacelle 103 is rotatably installed on the top of the tower 102. The nacelle 103 is installed such that it is rotated (pivots) in a horizontal plane by the wind turbine driving devices 1, which will be described later. A power transmission shaft, an electricity generator and so on are disposed inside the nacelle 103. The rotor 104 is coupled to the power transmission shaft and is configured to be rotatable relative to the nacelle 103. More than one blade 105 (three in this embodiment) is attached to the rotor 104 and they extend radially from rotor 104 at equiangular intervals. Note that the blades 105 are installed on a shaft portion provided in the rotor 104 so as to rock around the axis of the shaft portion and relative to the rotor 104 in a pitch direction. The blades 105 are rotatably driven by a wind turbine driving device that is configured same as the hereunder-describe wind turbine driving device 1 but serves as a pitch driving device. A pitch angle of the blade 105 is changed by rotatably driving the blade by the wind turbine driving device. In this embodiment, a moving part of the wind turbine 101 includes, for example, the nacelle 103 and the blade 105.

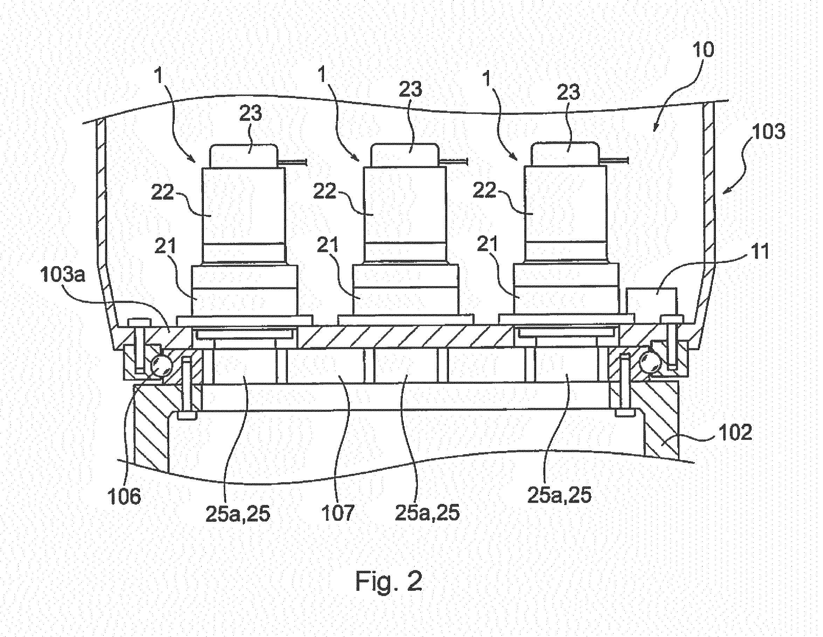

Fig. 2 is an enlarged sectional view of a portion of the nacelle 103 that is rotatably installed on the tower 102 of the wind turbine 101. Fig. 2 does not show a sectional view but an outside view of the wind turbine driving device 1. The nacelle 103 is configured to be rotatable relative to the top portion of the tower 102 via a bearing 106 interposed between a bottom portion 103a of the nacelle and the tower 102. A ring gear 107 having internal teeth on its inner circumference is fixed to the top portion of the tower 102. The ring gear 107 is a gear for rotating the nacelle 103. In Fig. 2, the internal teeth of the ring gear 107 are not shown. Note that the teeth of the ring gear 107 are not necessarily provided on the inner circumference of the ring gear 107 and may be alternatively provided on the outer circumference thereof.

More than one wind turbine driving device 1 is provided inside the nacelle 103. A body 21 of each wind turbine driving device 1 is fixed on the bottom portion 103a. An electric motor 22 is respectively fixed to the body 21. An output portion 25 of the wind turbine driving device 1 includes a pinion 25a that protrudes out from an opening formed in the bottom portion 103a of the nacelle 103 to be meshed with a ring gear 107. Note that the pinion 25a is schematically illustrated in Fig. 2. The wind turbine driving devices 1 are disposed at multiple (e.g., four) locations along the inner circumferential direction of the ring gear 107. By arranging the wind turbine driving devices 1 as described above, the pinions 25 are each configured to mesh with the ring gear 107 fixed to the tower 102. The electric motors 22 are each fixed to the nacelle 103 that is rotatable relative to the tower 102. In other words, the electric motors 22 are fixed to the nacelle 103 with the bodies 21 interposed therebetween. In this case, the electric motors 22 in the plurality of wind turbine driving devices 1 are synchronously driven to rotate the nacelles 103.

### Structure Of Wind Turbine Driving Device

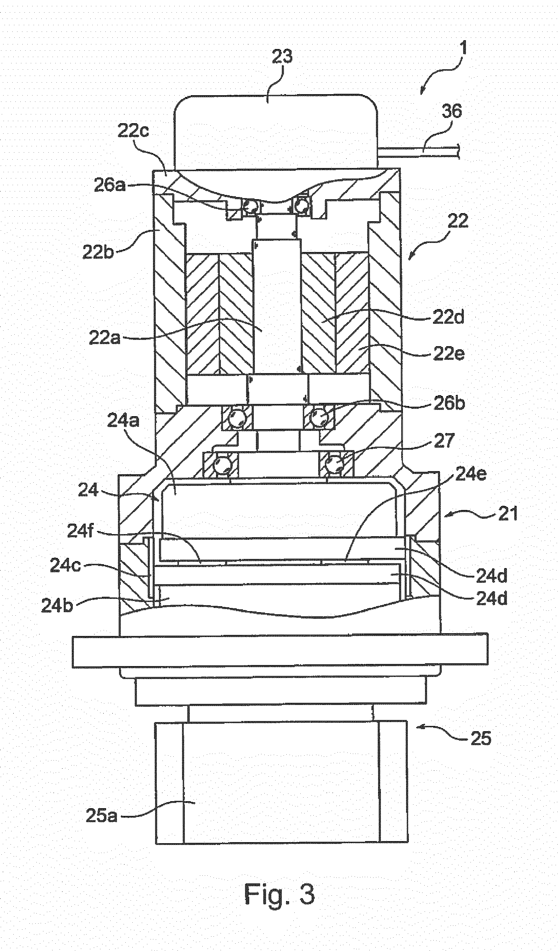

The wind turbine driving device 1 and the wind turbine driving device unit 10 according to one embodiment of the invention will be now described in detail. Fig. 3 is a front elevation of the wind turbine driving device 1 including a cutaway thereof. The wind turbine driving devices 1 shown in Figs. 2 and 3 are provided as yaw driving devices that cause the nacelle 103 to rotate relative to the tower 102 as described above. The wind turbine driving device 1 includes the body 21, the electric motor 22, a braking mechanism 23, a speed reducer 24, an output portion 25 and the like.

The body 21 of the wind turbine driving device 1 has a tubular structure. The speed reducer 24 is housed in the body 21. The electric motor 22 is fixed on the upper end of the body 21. Inside the body 21, the speed reducer 24 is coupled to an output shaft 22a of the electric motor 22.

The electric motor 22 includes the output shaft 22a, a cylindrical case 22b, a cover 22c that covers one end of the case 22b, a rotor 22d, a stator 22e and the like. The other end of the case 22b is fixed on the body 21. A through hole through which the output shaft 22a penetrates is formed in the cover 22c. One end of the output shaft 22a goes through the cover 22c and reaches in the brake mechanism 23 and the other end reaches in the body 21. The output shaft 22a is rotatably supported by the cover 22c via a bearing 26a and also rotatably supported by the body 21 through a bearing 26b. The rotor 22d includes permanent magnet and is attached to the outer periphery of the output shaft 22a. The stator 22e includes a coil and be attached to the inner periphery of the case 22b. When electric current runs through the coil of the stator 22e from an unshown electric power supply in response to a command from a control unit 11 which will be described later, the rotor 22a and the output shaft 22a are driven to rotate.

The speed reducer 24 is coupled to the output shaft 22a and the output portion 25 of the electric motor 22, and reduces the rotation speed of the output shaft 22a and transmits it to the output portion 25. The speed reducer 24 is an eccentric speed reducer that includes, for example, an end carrier 24a, a base carrier 24b,an internal tooth 24c arranged along the inner periphery of the body 21, a plurality of external gears 24d, more than one crankshaft 24e (only one crankshaft is shown in Fig. 3) and so on. The end carrier 24a is rotatably supported by the body 21 via a bearing 27. The base carrier 24b is coupled to the end carrier 24a through more than one pole 24f (only one pole is shown in Fig. 3) that penetrates the external gears 24b. The base carrier 24b is rotatably supported by the body 21. The external gears 24d have external tooth meshing with the internal tooth 24c. The crankshaft 24e has an eccentric portion, each end of the crankshaft 24e is rotatably supported by the end carrier 24a and the base carrier 24b respectively, and it penetrates the externa! gears 24d. The crankshaft 24e is rotated by the rotation of the output shaft 22a of the electric motor 22 and revolves to make the external gears 24d rock and rotate. The end carrier 24a and the base carrier 24b are rotated by the revolution of the crankshaft 24e and the output portion 25 fixed on the base carrier 24b is rotated.

Although the speed reducer 24 is configured as an eccentric speed reducer in the above, it is merely an example and the speed reducer 24 may be configured as a reducer other than the eccentric speed reducer. For instance, the speed reducer 24 may be formed from a planetary gear mechanism. Alternatively, the speed reducer 24 may be formed from a spur gear mechanism. Alternatively, the speed reducer 24 may be formed from any combination of an eccentric speed gear, a planetary gear mechanism, and a spur gear mechanism.

At the lower end of the body 21, the output portion 25 is disposed such that it projects out from the body 21. The output portion 25 is coupled to the speed reducer 24 at the end opposite to the end facing the output shaft 22a of the electric motor 22. The pinion 25a is provided at the other end of the output portion 25. The pinion 25a is disposed to mesh with the ring gear 107 provided on the wind turbine 101.

In the above-described wind turbine driving device 1, the electric motor 22 operates based on a command from the hereunder-described control unit 11 to generate a rotational driving force. The wind turbine driving device 1 transmits the rotational driving force generated by the electric motor 22 to the speed reducer 24 through the output shaft 22a. The rotational driving force input through the output shaft 22a is reduced by the speed reducer 24, and the reduced driving force is transmitted to the output portion 25 and then output from the pinion 25a. In this manner, the wind turbine driving device 1 rotates the pinion 25a that meshes with the ring gear 107 and the nacelle 103 is rotated relative to the tower 102.

### Structure Of Wind Turbine Driving Device Unit

The wind turbine driving device unit 10 according to the embodiment illustrated in Fig. 2 includes a plurality of the wind turbine driving devices 1 that serve as yaw driving devices. For instance, the wind turbine driving device unit 10 includs four wind turbine driving devices 1. The wind turbine driving devices 1 in the wind turbine driving device unit 10 is provided for the single ring gear 107. The wind turbine driving device unit 10 further include a control unit 11 that controls the plurality of wind turbine driving devices 1.

The control unit 11 is formed of a microcontroller or a microcomputer that includes, for example, a processor such as a central processing unit (CPU), memory, a timer, an input/output interface and the like. The control unit 11 is coupled to each of the wind turbine driving devices 1 to allow signals to be transmitted and received to/from the wind turbine driving devices 1. The control unit 11 controls the electric motor 22 and the braking mechanism 23 in each wind turbine driving device 1. Operation of the control unit 11 to control the wind turbine driving devices 1 will be described in later. In this embodiment, the control unit 11 is disposed in the nacelle 103.

### Braking Mechanism

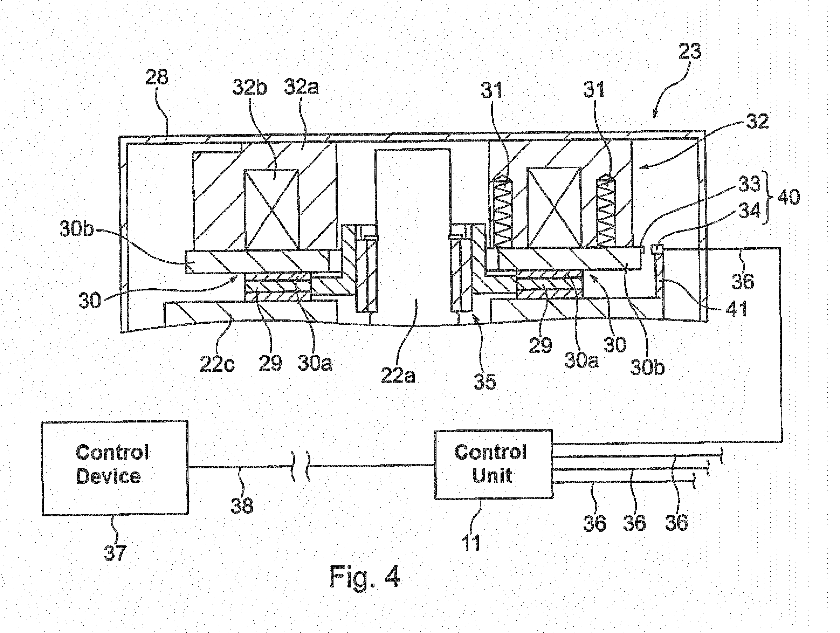

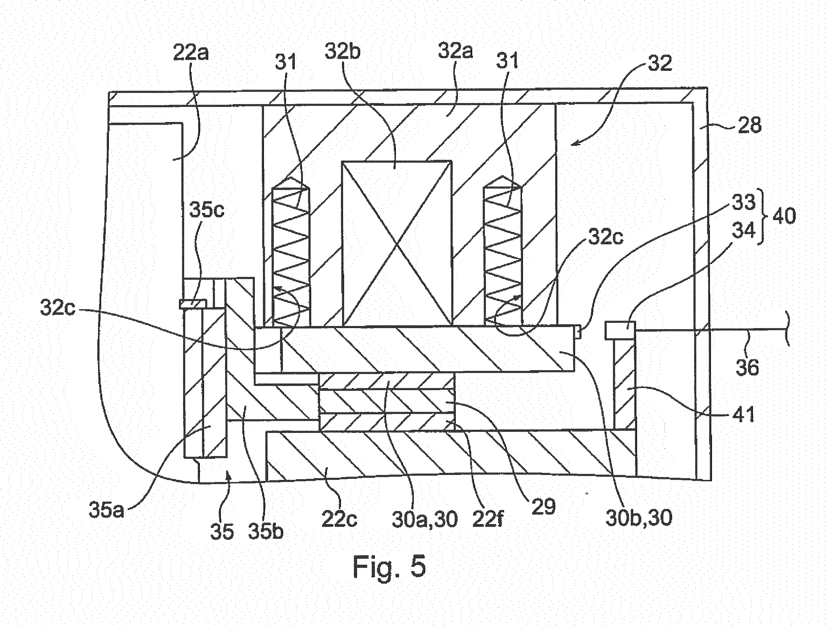

The braking mechanism 23 in the wind turbine driving device 1 will be now described. Fig. 4 schematically illustrates the control unit 11 in the wind turbine driving device unit 10 and a sectional view of the braking mechanism 23. Fig. 5 is a partially-enlarged sectional view of the braking mechanism 23 of Fig. 4. The braking mechanism 23 shown in Figs. 4 and 5 is configured to control and stop the rotation of the output shaft 22a of the electric motor 22 and to release braking on the output shaft 22a in response to a command from the control unit 11. When a brake is put on the rotation of the output shaft 22a, the wind turbine driving device 1 stops its operation. Whereas when a brake on the output shaft 22a is lifted, the wind turbine driving device 1 is able to operate to rotationally drive the nacelle 103. The braking mechanism 23 will be now described in detail.

The braking mechanism 23 is attached on the upper end of the electric motor 22. More specifically, the braking mechanism 23 is attached on the cover 22c at one end of the electric motor 22 further from the body 21. The braking mechanism 23 includes a housing 28, a first friction plate 29, a second friction plate 30, an elastic member 31, electromagnet 32, a detection unit 40 (a detection target portion 33, a detector 34), a first friction plate connector 35, and the like.

The housing 28 is configured to house the first friction plate 29, the second friction plate 30, the elastic member 31, the electromagnet 32, the detection unit 40 (the detection target portion 33, the detector 34), the first friction plate connector 35, and the like. The housing 28 is fixed on the cover 22c of the electric motor 22.

The first friction plate 29 may be formed of a sintered metal in a ring-plate shape. The upper end of the output shaft 22a of the electric motor 22 goes through a through hole formed in the central region of the first friction plate 29. The first friction plate 29 is coupled to the upper end of the output shaft 22a via the first friction plate connector 35, which is the end opposite to the one facing the speed reducer 24.

The first friction plate connector 35 includes a spline shaft 35a, a slide shaft 35b, and the like. The spline shaft 35a is a shaft member that has a spline tooth on its outer periphery and a through hole extending in the axial direction thereinside. The spline shaft 35a is fixed to the outer periphery of the upper end of the output shaft 22a through, for instance, key coupling via a key member (not shown) and engagement with a stoppering 35c.

The slide shaft 35b has a tubular portion where a spline groove is formed in the inner periphery and a flange portion that extends from one end of the tubular portion in a radial direction and spreads in a circumferential direction. The spline groove formed in the slide shaft 35b is configured to engage with the spline tooth of the spline shaft 35a to allow the slide shaft 35b to slide in the axial direction. In this manner, the slide shaft 35b is arranged to be slidable relative to the spline shaft 35a in the axial direction. The first friction plate connector 35 includes a spring mechanism (not shown) for placing the slide shaft 35b at a predetermined position in the axial direction with respect to the spline shaft 35a. An inner periphery of the first friction plate 29 is fixed on the edge of the outer periphery of the flange portion of the slide shaft 35b. In this way, the first friction plate 29 is coupled integrally with the slide shaft 35b.

According to the above-described configuration, when the output shaft 22a rotates in the braking mechanism 23, the spline shaft 35a, the slide shaft 35b, and the first friction plate 29 rotate together with the output shaft 22a. When the hereunder-described electromagnet 32 is excited, the slide shaft 35b and the first friction plate 29 that are retained slidably in the axial direction relative to the output shaft 22a and the spline shaft 35a are situated at a predetermined position in the axial direction of the spline shaft 35a with a retaining force from the spring mechanism. In this state, the first friction plate 29 is situated at a distance from hereunder-described second friction plate 30 and motor-side friction plate 22f.

The second friction plate 30 is formed to contact the first friction plate 29. By contacting the first friction plate 29, the second friction plate 30 generates a braking force on the output shaft 22a to stop the rotation of the output shaft 22a. The second friction plate 30 includes a contact portion 30a and an armature portion 30b.

The armature portion 30b is formed of a magnetic metal in a ring-plate shape. The armature portion 30b is held on one end of the electromagnet 32 such that the armature potion 30b is slidable relative to the end surface of the electromagnet 32 in parallel to the axial direction of the output shaft 22a. Note that a mechanism with which the armature portion 30b is slidably held at the end of the electromagnet 32 is not shown. At the central region of a through hole formed at the center of the armature portion 30b, the upper end portion of the output shaft 22a, the spline shaft 35a, and the tube portion of the slide shaft 35b are situated to penetrate the through hole of the armature portion 20b.

The contact portion 30a is formed of a sintered metal in a ring-plate shape. The contact portion 30a is fixed on the armature portion 30b and also configured to contact the first friction plate 29. More specifically, the end surface of the contact portion 30a further from the first friction plate 29 is fixed on the armature portion 30b. In the embodiment, the end surface of the contact portion 30a facing the first friction plate 29 has substantially the same area as that of the first friction plate 29.

In the embodiment, the motor-side friction plate 22f is provided on the end surface of the cover 22c of the electric motor 22 facing the first friction plate 29. The motor-side friction plate 22f may be formed of a sintered metal in a ring-plate shape. The motor-side friction plate 22f is disposed on the cover 22c such that it contacts the first friction plate 29. In the embodiment, the end surface of the first friction plate 29 facing the motor-side friction plate 22f has substantially the same area as that of the motor-side friction plate 22f.

The elastic member 31 is a member that biases the second friction plate 30 toward the first friction plate 29. The elastic member 31 is retained by an electromagnetic body 32a of the electromagnet 32 which will be described later. The elastic member 31 biases the second friction plate 30 in the direction from the electromagnet 32 side to the first friction plate 29. In the embodiment, the elastic member 31 is a coil spring. More than one elastic member 31 may be provided. One end of each elastic member 31 is held by the electromagnetic body 32a and the other end biases the armature portion 30b of the second friction plate 30. Although the elastic members 31 are coil springs in the embodiment, this is merely an example. Any spring members other than the coil springs may be used as the elastic members.

In the embodiment, more than one elastic member 31 is provided as mentioned above. The elastic members 31 are provided on the electromagnetic body 32a circumferentially around the output shaft22a at equal angle intervals. Moreover the elastic members 31 are arranged in two concentric circles on the electromagnetic body 32a circumferentially around the output shaft22a. The inner circle of the elastic members 31 of the two concentric circles is situated on the inner side of a coil 32b of the electromagnet 32. Whereas the outer circle of the elastic members 31 of the two concentric circles of the elastic members 31 is situated on the outer side of a coil 32b of the electromagnet 32. The arrangement of the elastic members 31 described above is merely an example and the elastic members 31 may be arranged in different configurations.

The electromagnet 32 is for changing a distance between the first friction plate 29 and the second friction plate 30 by moving the second friction plate 30. More specifically, the electromagnet 32 magnetically attracts the second friction plate 30 to bias the second friction plate 30 in the direction in which the second friction plate 30 is separated from the first friction plate 29. The electromagnet 32 includes the electromagnetic body 32a, the coil 32b and the like.

The electromagnetic body 32a has a cylindrical shape that has a through hole formed at its center region. The end of the output shaft 22a is disposed in the through hole formed at the center region of the electromagnetic body 32a. The end of the electromagnetic body 32a further from the second friction plate 30 is fixed on the housing 28. A plurality of elastic-member retaining holes 32c that open toward the second friction plate 30 are formed in the electromagnetic body 32a to house and retain the elastic members 31 therein.

The coils 32b is disposed inside the electromagnetic body 32a and arranged along the circumferential direction of the electromagnetic body 32a. Supplying and shutting off of electric current to the coil 32b is performed based on a command from the control unit 11. When a brake on the output shaft 22a by the braking mechanism 23 is to be released, electric current is supplied to the coil 32b to energize the electromagnet 32 based on a command from the control unit 11. When the electromagnet 32 is excited, the armature portion 30b of the second friction plate 30 is attracted to the coil 32b by magnetic force generated by the electromagnet 32.

As described above, when the electromagnet 32 is excited, the second friction plate 30 is biased against the elastic force (spring force) of the elastic members 31 and attracted to the electromagnet 32. The contact portion 30a of the second friction plate 30 subsequently moves away from the first friction plate 29 and the brake on the output shaft 22a is released. Under the state where the electromagnet 32 is excited and the brake on the output shaft 22a is released, the armature portion 30b of the second friction plate 30 contacts the electromagnetic body 32a.

When the braking mechanism 23 puts a brake on the output shaft 22a, electric current supplied to the coil 32b is cutout based on a command from the control unit 11 and the electromagnet 32 is demagnetized. When the electromagnet 32 is demagnetized, the second friction plate 30 is biased toward the first friction plate 29 by an elastic force of the plurality of elastic members 31. Consequently the contact portion 30a of the second friction plate 30 contacts the first friction plate 29, and a friction force generated between the second friction plate 30 and the first friction plate 29 puts a brake on rotation of the output shaft 22a. Figs. 4 and 5 illustrate the state where the electromagnet 32 is demagnetized and the rotation of the output shaft 22a is braked.

When the electromagnet 32 is demagnetized and the output shaft 22a is braked, the first friction plate 29 also contacts the motor-side friction plate 22f due to the bias force from the second friction plate 30. More specifically, when the electromagnet 32 is in a demagnetized state, the first friction plate 29 is sandwiched between the second friction plate 30 and the motor-side friction plate 22f due to the bias force exerted by the plurality of elastic members 31. Consequently the friction force generated between the second friction plate 30 and the first friction plate 29 and the friction force generated between the first friction plate 29 and the motor-side friction plate 22f brakes the rotation of the output shaft 22a.

The detection unit 40 detects a distance between the first friction plate 29 and the second friction plate 30 and includes the detection target portion 33 and the detector 34 that are for detecting the distance between the first friction plate 29 and the second friction plate 30.

The detection target portion 33 is used for detecting the position and displacement of the second friction plate 30 in a direction parallel to the axial direction of the output shaft 22a by the detector 34 which will be described later in detail. The detection target portion 33 is be fixed to the second friction plate 30 via, for example, a detection target portion attachment 42 (which will be described later) so that the detection target portion 33 moves together with the second friction plate 30. In the embodiment, the detection target portion 33 is provided as permanent magnet. The detection target portion 33 is fixed on the armature portion 30b of the second friction plate 30. In the embodiment, the detection target portion 33 is fixed on the outer edge of the armature portion 30b closer to the electromagnet 32. Therefore by detecting the position of the detection target portion 33 by the detector 34, a portion of the second friction plate 30 where may contact the electromagnet 32 is detected at a position in a direction parallel to the output shaft 22a.

The detector 34 is provided as a sensor that is disposed on the electric motor 22 side and detects a position and displacement of the detection target portion 33 that moves along with the second friction plate 30. More specifically, the detector 34 is configured to detect the position and displacement of the detection target portion 33 in the direction parallel to the axial direction of the output shaft 22a in order to detect the position and displacement of the second friction plate 30 in the direction parallel to the axial direction of the output shaft 22a.

In the embodiment, the detector 34 is provided as a magnetic sensor. The detector 34 is attached to the cover 22c of the electric motor 22 via a detector attachment 41 so that it is fixed to the electric motor 22. The detector 34 is provided as a sensor that measures an intensity and a direction of a magnetic field generated by the detection target portion 33 which is permanent magnet. The detector 34 detects the position and displacement of the detection target portion 33 by measuring the intensity and direction of the magnetic field generated by the detection target portion 33. In the embodiment, the detector 34 is attached to the detector attachment 41 that is fixed on the cover 22c, and the detector 34 is fixed at a position corresponding to the end surface of the electromagnetic body 32a that contacts the armature portion 30b in the direction parallel to the axial direction of the output shaft 22a. In this case, the length (diameter) of the cover 22c in the radial direction is longer than the length (diameter) of the armature portion 30b in the radial direction. In this way, the detector 34 can be easily attached to the over 22c via the detector attachment 41.

The detector 34 is coupled to the control unit 11 through a communication cable 36. The detector 34 is therefore configured to output a detection result to the control unit 11. The detector 34 in each of the wind turbine driving devices 1 is configured to output a detection result to the control unit 11 through the communication cable 36. More specifically, after the position and displacement of the second friction plate 30 are detected by the detector 34 in each wind turbine driving device 1, the result of the detection performed by the detector 34 is respectively transmitted to the control unit 11, and the control unit 11 receives the results from the detectors 34. Each detector 34 is also configured to receive a command signal from the control unit 11 through the communication cable 36.

The control unit 11 is configured to check operation of the second friction plate 30 and the amount of wear of at least the first friction plate 29 and/or the second friction plate 30 based on the detection result of the detector 34 in each wind turbine driving device 1. Therefore each wind turbine driving device 1 is configured such that operation of the second friction plate 30 is detected and checked based on the result of detection performed by the detector 34, and the amount of wear of at least the first friction plate 29 and/or the second friction plate 30 is detected.

In the embodiment, the control unit 11 is configured to check operation of the second friction plate 30 based on the position of the second friction plate 30 detected by the detector 34 when the electromagnet 32 is transitioned from a demagnetized state to an excited state. Therefore in the wind turbine driving device 1, the operation of the second friction plate 30 is checked by detecting the position of the second friction plate 30 using the detector 34 when the electromagnet 32 is transitioned from a demagnetized state to an excited state.

Moreover, in the embodiment, the control unit 11 is configured to detect the amount of wear of at least the first friction plate 29 or the second friction plate 30 or both based on the position of the second friction plate 30 detected by the detector 34 when the electromagnet 32 is in a demagnetized state. Therefore the wind turbine driving device 1 is configured such that the amount of wear of at least the first friction plate 29 or the second friction plate 30 or both is detected by detecting the position of the second friction plate 30 using the detector 34 when the electromagnet 32 is in a demagnetized state.

### Structure Around Detection Unit

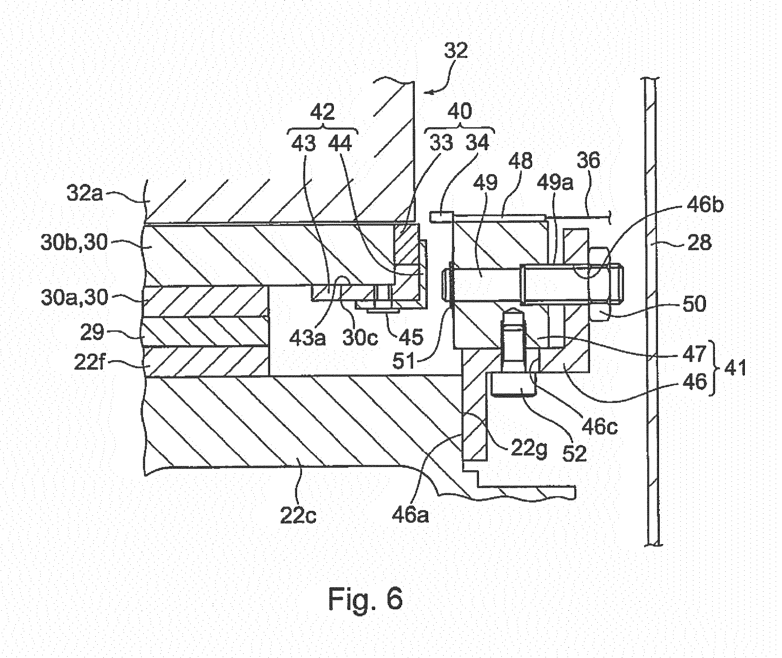

A structure for attaching the detection unit 40 (the detection target portion 33 and the detector 34) will be now described with reference to Fig. 6. Fig. 6 is a partially enlarged sectional view showing the periphery of the detection unit 40.

As described above, the detection target portion 33 is fixed to the second friction plate 30 and the detection target portion 33 moves together with the second friction plate 30. More specifically, the detection target portion 33 is attached to the armature portion 30b via the detection target portion attachment 42. The detection target portion attachment 42 includes a first support member 43 that supports the detection target portion 33 in the axial direction and the circumferential direction, and a second support member 44 that supports the detection target portion 33 in the radial direction.

The first support member 43 has a substantially L-shaped cross section, and its horizontal surface 43a (the surface that faces toward the electromagnet 32) is attached to a lower surface 30c (the surface that faces toward the electric motor 22) of the armature portion 30b. The second support member 44 has a substantially L-shaped cross section and is arranged on the outer side (the side opposite to the armature portion 30b) of the first support member 43. Further, the first support member 43 and the second support member 44 are connected to each other by a fastening member 45 such as a screw or a bolt.

In this embodiment, the horizontal surface 43a of the first support member 43 and the lower surface 30c of the armature portion 30b are adhered to each other by adhesion means such as an adhesive, whereby the detection target portion 33 is attached to the second friction plate 30. In this case, it is not necessary to perform an additional processing such as forming a bolt hole or the like in the second friction plate 30 in order to attach the detection target portion 33 to the second friction plate 30. Therefore, the detection target portion 33 can be easily attached to the existing second friction plate 30.

As described above, the detector 34 is attached to the cover 22c of the electric motor 22 via the detector attachment 41 so that it is fixed to the electric motor 22. The detector attachment 41 has a base portion 46 attached to the cover 22c and a detector placing portion 47 provided so as to be positionally adjustable on the base portion 46.

The base portion 46 has a substantially crank shape in section, and its inner surface 46a (the surface that faces toward the output shaft 22a) is attached to an upper side surface 22g (the surface that faces toward the housing 28) of the cover 22c.

In this embodiment, the inner surface 46a of the base portion 46 and the upper side surface 22g of the cover 22c are adhered to each other by adhesion means such as an adhesive, whereby the detector 34 is attached to the electric motor 22. In this case, it is not necessary to perform an additional processing such as forming a bolt hole or the like in the electric motor 22 in order to attach the detector 34 to the electric motor 22. Therefore, the detector 34 can be easily attached to the existing electric motor 22.

The detector placing portion 47 has a substantially block shape and is disposed on the base portion 46 such that it is movable thereon. Further, the detector 34 is attached on the detection part placing portion 47. More specifically, the communication cable 36 extending from the detector 34 is inserted into a cylindrical member 48 such as a heat shrink tube, and the cylindrical member 48 is adhered to the upper surface of the detector placing portion 47, thereby the detector 34 is attached to the detector placing portion 47.

The base portion 46 and the detector placing portion 47 are connected to each other by a rod-like adjustment component 49 that extends in the radial direction (the right-left direction in Fig. 6). The adjustment component 49 is inserted into a through hole 46b formed in the base portion 46. A threaded portion 49a is formed in the outer periphery of the adjustment component 49, and an adjustment nut 50 is screwed in a portion of the threaded portion 49a located on the outer side (the side facing toward the housing 28) of the base portion 46. A stopper 51 including, for example, a C-shaped retaining ring and a washer is attached to the inner portion of the adjustment component 49 (the second friction plate 30), and the detector placing portion 47 is retained between this stopper 51 and the adjustment nut 50. A elongate hole 46c is formed along the radial direction in a horizontal portion of the base portion 46 that extends in the radial direction (the right-left direction in Fig. 6). A fastening member 52 such as a bolt is inserted into the elongate hole 46c. A tip of the fastening member 52 is screwed in the detector placing portion 47.

When minor adjustment of the position of the detector placing portion 47 is performed with respect to the base portion 46, the fastening member 52 is firstly loosened. The adjustment nut 50 is then tightened around the adjustment component 49 while the fastening member 52 is loosened, and the detector placing portion 47 and the detector 34 are moved toward the outside (toward the housing 28) along the radial direction. Once the detector 34 reaches to an appropriate position with respect to the detection target portion 33, the fastening member 52 is tightly fastened. In this way, the detector placing portion 47 is fixed to the base portion 46, and alignment of the detector 34 is completed. In this manner, the detection target portion 33 and the detector 34 are configured such that their mutual positional relationship can be adjusted. Therefore, for example, at the time of maintenance, the positional relationship between the detection target portion 33 and the detector 34, in particular, the distance between the detection target portion 33 and the detector 34 can be easily adjusted.

### Modification Example Of Structure Around Detection Unit

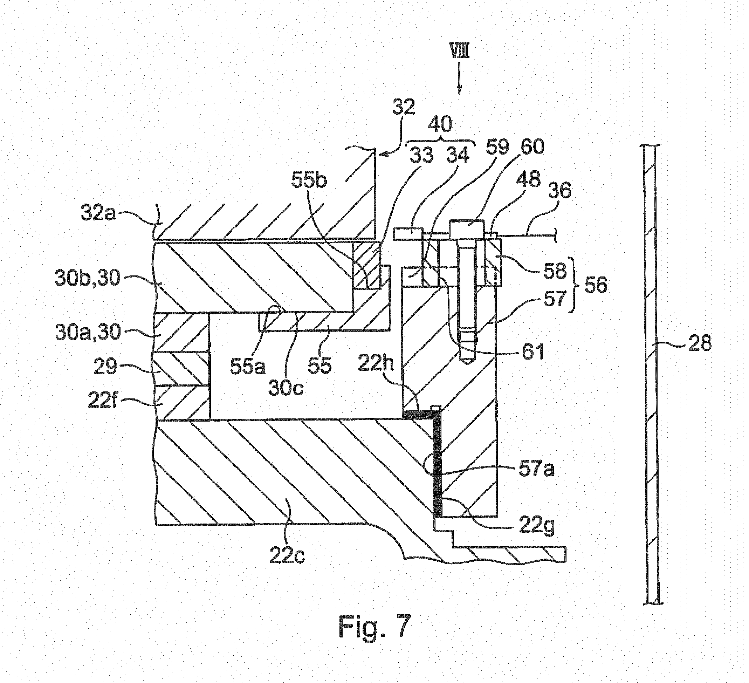

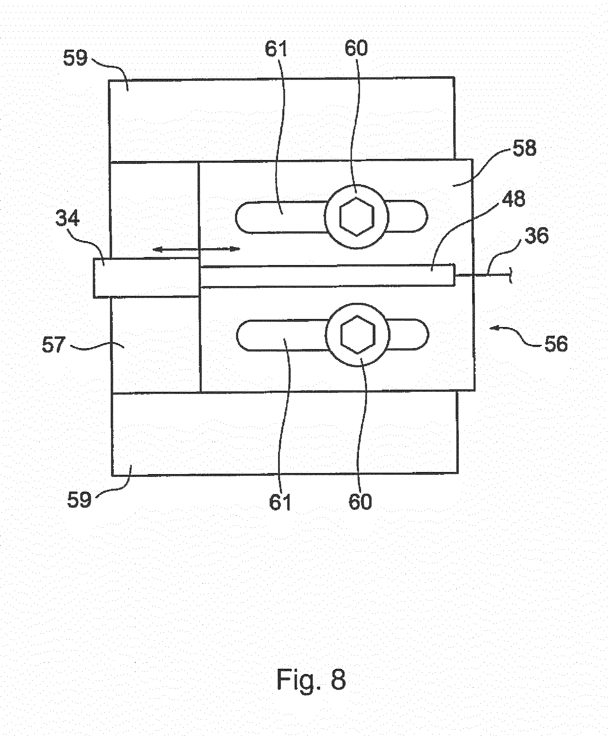

Other structures for attaching the detection unit 40 (the detection target portion 33 and the detector 34) will be now described with reference to Figs. 7 and 8. Fig. 7 is a partially enlarged sectional view (corresponding to Fig. 6) showing the periphery of the detection unit 40, and Fig. 8 is a view as seen in the direction of the arrow VIII of Fig. 7.

Referring to Fig. 7, the detection target portion 33 is attached to the armature portion 30b via a detection target portion attachment 55. The detection target portion attachment 55 supports the detection target portion 33 in the axial direction, the circumferential direction, and the radial direction. The detection target portion attachment 55 has a mounting surface 55a (the surface that faces toward the electromagnet 32), and the mounting surface 55a is attached to the lower surface 30c (the surface that faces toward the electric motor 22) of the armature portion 30b. A holder recess 55b for accommodating the detection target portion 33 is formed in the detection target portion attachment 55. Since the detection target portion 33 is held by the holder recess 55b, displacement of the detection target portion 33 in the axial direction, the circumferential direction, and the radial direction is restricted. The detection target portion 33 may be attached to the holder recess 55b with, for example, an adhesive or the like.

In this embodiment, the mounting surface 55a of the detection target portion attachment 55 and the lower surface 30c of the armature portion 30b are adhered to each other by adhesion means such as an adhesive, whereby the detection target portion 33 is attached to the second friction plate 30. In this case, it is not necessary to perform an additional processing such as forming a bolt hole or the like in the second friction plate 30 in order to attach the detection target portion 33 to the second friction plate 30. Therefore, the detection target portion 33 can be easily attached to the existing second friction plate 30. Furthermore, since the detection target portion attachment 55 is formed as a single member, the structure for attaching the detection target portion 33 to the second friction plate 30 becomes simple, and the number of components can be reduced.

The detector 34 is attached to the cover 22c of the electric motor 22 via the detector attachment 56. The detector attachment 56 has a base portion 57 attached to the cover 22c and a detector placing portion 58 provided so as to be positionally adjustable on the base portion 57.

The base portion 57 has a notch portion 57a that faces radially inward and is cut at right angles, and this notch portion 57a is disposed on the upper side surface 22g (the surface that faces toward the housing 28) and the upper peripheral edge portion 22h of the cover 22c.

In this embodiment, the notch portion 57a of the base portion 57 and the upper side surface 22g and the upper peripheral edge portion 22h of the cover 22c are adhered to each other by adhesion means such as an adhesive, whereby the detector 34 is attached to the electric motor 22. In this case, it is not necessary to perform an additional processing such as forming a bolt hole or the like in the electric motor 22 in order to attach the detector 34 to the electric motor 22. Therefore, the detector 34 can be easily attached to the existing electric motor 22. Moreover, the structure for attaching the detector 34 to the electric motor 22 is simple and therefore it is possible to reduce the number of components.

The detector placing portion 58 has a substantially block shape and is disposed on the base portion 57. Further, the detector 34 is attached on the detection part placing part 58. More specifically, the communication cable 36 extending from the detector 34 is inserted into a cylindrical member 48 such as a heat shrink tube and the cylindrical member 48 is adhered to the upper surface of the detector placing portion 58, thereby the detector 34 is attached to the detector placing portion 58.

As shown in Fig. 8, a pair of guide convex portions 59 respectively extending in the radial direction are provided on the base portion 57. The guide convex portions 59 may be formed integrally with the base portion 57 or may be separately formed and then fixed to the base portion 57. The detector placing portion 58 is movable in the radial direction between the pair of guide convex portions 59. The base portion 57 and the detector placing portion 58 are connected to each other by a fastening member 60 such as a bolt that extends in parallel with the axial direction. The fastening member 60 is inserted into a long through hole 61 formed in the detector placing portion 58. In this case, two long through holes 61 are formed along the radial direction, but the number of the long through holes 61 may be one or three or more.

When the position of the detector placing portion 58 is slightly adjusted with respect to the base portion 57, the detector placing portion 58 is moved between the pair of guide convex portions 59 while the fastening member 60 is loosened, and the detector 34 is moved along the radial direction to adjust the position. Once the detector 34 reaches to an appropriate position with respect to the detection target portion 33, the fastening member 60 is tightly fastened. In this way, the detector placing portion 58 is fixed to the base portion 57, and alignment of the detector 34 is completed. In this manner, the detection target portion 33 and the detector 34 are configured such that their mutual positional relationship can be adjusted. Therefore, for example, at the time of maintenance, the positional relationship between the detection target portion 33 and the detector 34, in particular, the distance between the detection target portion 33 and the detector 34 can be easily adjusted.

### Second Friction Plate Operation Check Process And Wear Amount Detection Process

Operations of the wind turbine driving device 1 and the wind turbine driving device unit 10 will be now described. The wind turbine driving device 1 and the wind turbine driving device unit 10 operate based on control performed by the control unit 11. The control unit 11 is coupled via a communication cable 38 to an upper-level control device 37 that controls operation of the wind turbine 101 as illustrated in Fig. 4. The control unit 11 controls the wind turbine driving devices 1 based on commands from the control device 37.

More specifically, each wind turbine driving device 1 operates such that the electric motor 22 in the wind turbine driving device 1 operates based on a command from the control unit 11 to rotationally drive the nacelle 103. Moreover, operation of each electric motor 22 is stopped based on a command from the control unit 11, and each brake mechanism 23 puts a brake on the corresponding output shaft 22a. A brake on each output shaft 22a by the corresponding braking mechanism 23 is released based on a command from the control unit 11. Furthermore, the control unit 11 checks braking states of the first friction plate 29 and the second friction plate 30 based on the result of detection performed by each detector 34. More specifically, the control unit 11 performs a second friction plate operation check process and a wear amount detection process based on the result of detection performed by each detector 34. The second friction plate operation check process and the wear amount detection process performed in the wind turbine driving device 1 and the wind turbine driving device unit 10 will be now described in detail.

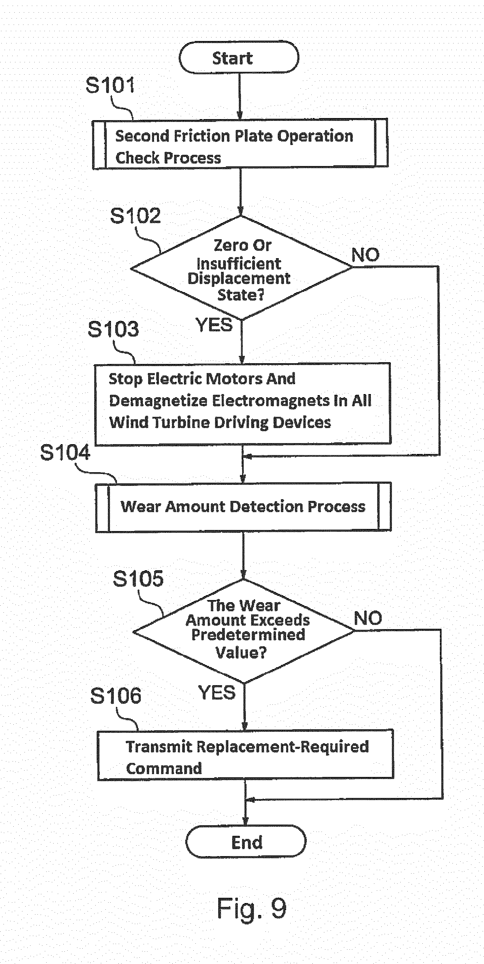

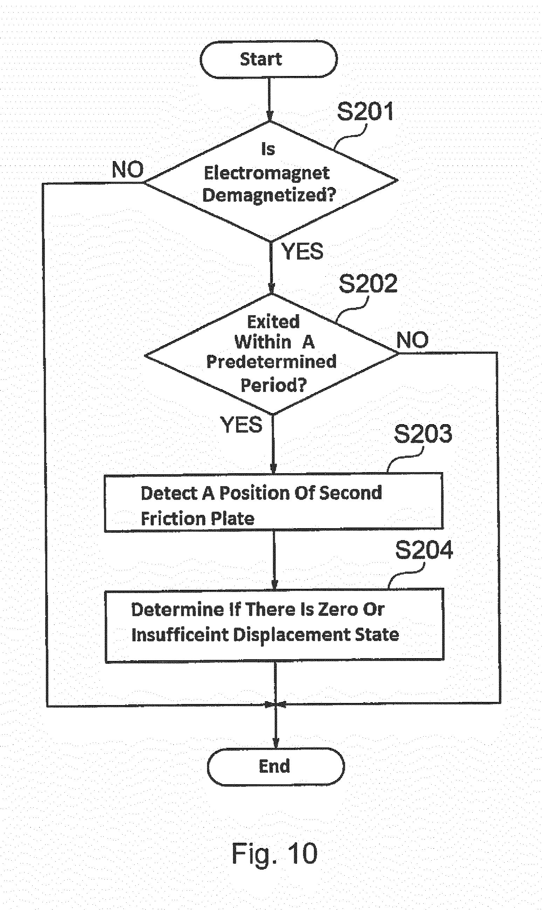

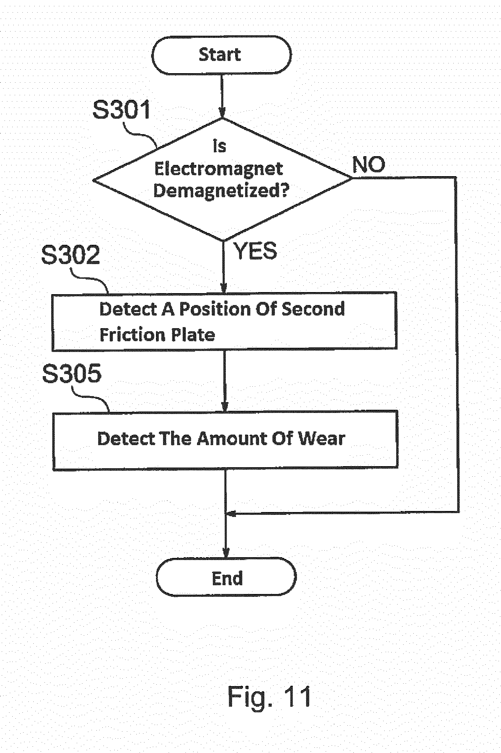

Fig. 9 is a flow chart for describing operations of the wind turbine driving device 1 and the wind turbine driving device unit 10 including the second friction plate operation check process and the wear amount detection process. Fig. 10 is a flow chart of the second friction plate operation check process mentioned in the flow chart of Fig. 9. Fig. 11 is a flow chart of the wear amount detection process mentioned in the flow chart of Fig. 9.

The control unit 11 performs steps shown in Fig. 9 on each wind turbine driving device 1. For instance, the control unit 11 repeatedly performs the steps shown in Fig. 9 for each of the wind turbine driving devices 1 sequentially. Once the process of Fig. 9 is completed for all the wind turbine driving devices 1, the process of Fig. 9 is started again and performed sequentially on each wind turbine driving device 1. Moreover each time the process of Fig. 9 is completed for all the wind turbine driving devices 1, the process of Fig. 9 is sequentially iterated for each wind turbine driving device 1.

When steps of Fig. 9 are performed, the control unit 11 firstly performs the second friction plate operation check process (Step S101). More specifically, a process shown in Fig. 10 is performed as the second friction plate operation check process. In the second friction plate operation check process of Fig. 10, firstly whether the electromagnet 32 is in a demagnetized state or not is determined (Step S201). When the electromagnet 32 is in an excited state (Step S201: No), the second friction plate operation check process of Fig. 10 is temporarily ended. As described above, the excitation operation and the demagnetizing operation of the electromagnet 32 are performed by switching on/off of the current supply to the electromagnet 32 based on a command from the control unit 11. The control unit 11 performs Step S201 depending on a status of the command issued for the electromagnet 32.

When the electromagnet 32 is demagnetized (Step S201: Yes), it is determined whether an excitation operation was performed within a predetermined period of time after Step S201 had been performed (Step S202). The predetermined period of time in Step S202 may be adequately set in advance. When the control unit 11 issued a command to excite the electromagnet 32 within the predetermined period of time after Step S201 had been performed, it is determined that the excitation was performed in the predetermined period of time. The control unit 11 determines whether the excitation was performed within a predetermined limited period of time after Step S201 had been performed. Therefore the control unit 11 can know whether operation to transition the electromagnet 32 from the demagnetized state to the excited state was performed.

When it is determined that the excitation was not performed within the predetermined period of time after Step S201 had been performed (Step S202: No), the second friction plate operation check process of Fig. 10 is temporarily ended. Whereas when it is determined that the excitation was performed within the predetermined period of time after Step S201 had been performed (Step S202: Yes), the control unit 11 receives a result of the position detection of the second friction plate 30 performed by the detector 34 and detects the position of the second friction plate 30 (Step S203).

When the control unit 11 detects the position of the second friction plate 30 that was detected by the detector 34 (Step S203), the control unit 11 conducts Step S204. In Step S204, the control unit 11 determines whether a zero-displacement state of the second friction plate 30 where the position of the second friction plate 30 is unchanged occurs or not based on the detected position of the second friction plate 30. In Step S204, the control unit 11 determines whether an insufficient displacement state of the second friction plate 30 where the second friction plate 30 is drawn but does not reach a predetermined position by the magnetic force of the electromagnet 32 occurs or not. Here, the predetermined position may be adequately set in advance. For example, the position may be set at a certain distance from the end surface of the electromagnetic body 32a that faces the second friction plate 30.

When the first friction plate 29 and the second friction plate 30 that generate a braking force are stuck to each other, the above-mentioned zero-displacement state is detected. When the second friction plate 30 is separated from the first friction plate 29 but the second friction plate 20 is somehow engaged with other member and the second friction plate 30 is not displaced to an appropriate position, the above-mentioned insufficient displacement state is detected. In this manner, the control unit 11 checks the operation of the second friction plate 30 and detects malfunction of the second friction plate 30 by carrying out the process of Fig. 10. That is, the control unit 11 is configured to check operation of the second friction plate 30 based on the position of the second friction plate 30 detected by the detector 34 to detect malfunction of the second friction plate 30 when the electromagnet 32 is transitioned from a demagnetized state to an excited state.

After Step 204 is performed, Step S102 and the following steps shown in Fig. 9 are carried out. In Step S102, whether the zero-displacement state or the insufficient displacement state occurs is determined based on the result of the second friction plate operation check process (Step S101). When it is determined that the zero-displacement state or the insufficient displacement occurs (Step S102: Yes), a command to stop the operation of the electric motor 22 and a command to demagnetize the electromagnet 32 are issued for all the wind turbine driving devices 1 from the control unit 11 (Step S103). In this way, when a malfunction of the second friction plate 30 occurs in any of the wind turbine driving devices 1, the electric motors 22 in all the wind turbine driving devices 1 are stopped and rotation of the output shafts 22a in all the wind turbine driving devices 1 are braked. When it is determined that the zero-displacement state or insufficient displacement state is not occurring (Step S102: No), Step S103 is not carried out but the wear amount detection process (Step S104) is performed.

As described above, if the zero-displacement state or the insufficient displacement state of the second friction plate 30 in any of the wind turbine driving devices 1 is detected when the electromagnet 32 is transitioned from a demagnetized state to an excited state, it is determined that the braking state of the wind turbine driving device 1 indicates an abnormal state, and the control unit 11 stops operation of the electric motors 22 in all the wind turbine driving devices 1. Moreover, the control unit 11 demagnetizes the electromagnets 32 in all the wind turbine driving devices 1 when the control unit 11 stops operation of the electric motors 22 in all the wind turbine driving devices 1. In this way, when malfunction of the second friction plate 30 occurs in any of the wind turbine driving devices 1 in the wind turbine driving device unit 10, it is possible to prevent an external force from the wind turbine driving devices 1 in which the second friction plates operate normally from working on the wind turbine driving device 1 in which the malfunction occurs.

After Step S102 and Step S103 are carried out, the wear amount detection process (Step S104) is performed. The process shown in Fig. 11 is performed as the wear amount detection process. In the wear amount detection process of Fig. 11, firstly whether the electromagnet 32 is in a demagnetized state or not is determined (Step S301). When the electromagnet 32 is in an excited state (Step S301: No), the wear amount detection process of Fig. 11 is temporarily ended.

When the electromagnet 32 is demagnetized (Step S301: Yes), the control unit 11 receives a result of the position detection of the second friction plate 30 performed by the detector 34 and detects the position of the second friction plate 30 (Step S302). When the control unit 11 detects the position of the second friction plate 30 that was detected by the detector 34 (Step S203), the control unit 11 conducts Step S303. In Step S303, the control unit 11 detects the amount of wear of the first friction plate 29 and the second friction plate 30 based on the detected position of the second friction plate 30.

If the first friction plate 29 and/or the second friction plate 30 is worn, the position of the second friction plate 30 in the state where the electromagnet 32 is demagnetized changes in accordance with the amount of wear. More specifically, when the wear of the friction plate advances, the position of the second friction plate 30 in the state where the electromagnet 32 is demagnetized moves away from the electromagnet 32 from the original position where the second friction plate 30 was initially disposed when the electromagnet 32 is in a demagnetized state. The control unit 11 calculates the wear amount of the first friction plate 29 and the second friction plate 30 as the amount of positional change of the second friction plate based on the detection result of the position of the second friction plate 30. The amount of positional change is calculated as a change from the original position of the second friction plate 30 where the second friction plate 30 was initially disposed in the state where the electromagnet 32 is demagnetized to the detected position of the second friction plate 30.

After Step 303 is performed, Step S105 and the following steps shown in Fig. 9 are carried out. In Step S105, it is determined whether the calculated wear amount is equal to or more than a predetermined value based on the result of the wear amount detection process (Step S104). Here, the predetermined value of the wear amount is adequately set in advance in consideration of, for example, an acceptable range of the wear amount of the first friction plate 29 and the second friction plate 30 in which the braking mechanism 23 is able to generate a necessary braking force.

When the wear amount detected in the wear amount detection process (Step S104) is equal to or larger than the predetermined value (Step S105: Yes), the control unit 11 transmits a replacement-required command to the upper-level control device 37 (Step S106). Here, the replacement-required command is a command indicating that replacement of the first friction plate 29 and the second friction plate 30 in the wind turbine driving device 1 in which the detected wear amount is equal to or more than the predetermined value is required. Whereas when the wear amount detected in Step S105 is smaller than the predetermined value or when detection of the wear amount is not performed since the electromagnet 32 is not demagnetized, Step S106 is not performed and the process of Fig. 9 is temporarily ended.

As described above, when the wear amount detected in the wear amount detection process is equal to or larger than the predetermined value in any of the wind turbine driving devices 1, the control unit 11 transmits, to the upper-level control device 37, the replacement-required command indicating that replacement of the first friction plate 29 and the second friction plate 30 in the wind turbine driving device 1 in which the detected wear amount is equal to or more than the predetermined value is required. When the control device 37 received the replacement-required command, for instance, the control device 37 displays alarm based on the replacement-required command on a display monitor which a worker who manages and maintains the operation of the wind turbine watches. In this manner, the worker is able to promptly know that there is a wind turbine driving device 1 in which the first friction plate 29 and the second friction plate 30 need to be replaced.

After the process of Fig. 9 is completed for one wind turbine driving device 1, the process of Fig. 9 is resumed for another wind turbine driving device 1. Eventually the process of Fig. 9 is performed on all the wind turbine driving devices 1. Moreover each time the process of Fig. 9 has been performed for all of the wind turbine driving devices 1, the process of Fig. 9 is iterated again for each wind turbine driving device 1.

### Advantageous Effects Of The Embodiment

As described above, in the embodiment, the second friction plate 30 is attracted to the electromagnet 32 by the magnetic force of the electro magnet 32 against the elastic force of the elastic members 31 when the electromagnet 32 is excited, and the second friction plate 30 moves away from the first friction plate 29. In this way, a state where a braking force is not generated is maintained. When the electromagnet 32 is demagnetized, the second friction plate 30 is pressed toward the first friction plate 29 by the elastic force of the elastic members 31 and the braking force is generated therebetween. When the electromagnet 32 is excited again, the braking force is canceled.

Furthermore, according to the embodiment, in the wind turbine driving device 1, the detection unit 40 includes the detection target portion 33 and the detector 34 for detecting the distance between the first friction plate 29 and the second friction plate 30. The detection target portion 33 is attached to the second friction plate 30, and the detector 34 is attached to the electric motor 22. Operation of the second friction plate 30 is detected and checked based on a result of detection performed by the detector 34. In this way, it is possible to easily detect occurrence of a malfunction in the second friction plate 30. Moreover, based on the detection result from the detector 34, the wear amount of the first friction plate 29 and the second friction plate 39 is detected. In this way, it is possible to easily know the amount of wear. Moreover, based on the detection result from the detector 34, it is possible to easily obtain the distance between the first friction plate 29 and the second friction plate 30. In the embodiment, with the simple configuration in which the detection target portion 33 is provided on the second friction plate 30 side and the detector 34 is provided on the electric motor 22 side to detect the position and displacement of the detection target portion 33, it is possible to check the operation of the second friction plate 30 and to detect the wear amount of the first and second friction plates 29, 30.

Therefore, according to the embodiment, it is possible to provide the wind turbine driving devices 1 and the wind turbine driving device unit 10 in which the wear amount of the first and second friction plates 29, 30 can be easily known and a malfunction of the second friction plate 30 can be easily detected.

Furthermore, a malfunction of the second friction plate 30 is easily detected when the electromagnet 32 is transitioned from the demagnetized state to the excited state, and the wear amount of the first and second friction plates 29, 30 is easily detected when the electromagnet 32 is in a demagnetized state.

In the embodiment, in the plurality of the wind turbine driving device1, whether the zero-displacement state or the insufficient displacement state of the second friction plate 30 occurs is determined when the electromagnet 32 is transitioned from the demagnetized state to the excited state. When the zero-displacement state or the insufficient displacement state is detected in any of the wind turbine driving devices 1, the electric motors 22 in all the wind turbine driving devices 1 are stopped. In other words, not only in the wind turbine driving device 1 in which the zero-displacement state or the insufficient displacement state occurs but also in all the wind turbine driving devices 1, operation of the electric motors 22 are stopped. Therefore when a malfunction of the second friction plate 30 occurs in any of the wind turbine driving devices 1, it is possible to prevent external forces from the other wind turbine driving devices 1 from working concentratedly on the output portion 25 of the wind turbine driving device 1 in which the malfunction of the second friction plate 30 occurs. In this way, it is possible to prevent breakage of the ring gear 107 and the like in the wind turbine driving device 1 or the wind turbine 101.

Furthermore, according to the embodiment, when at least one braking state of the wind turbine drive device 1 indicates an abnormality, the operation of the electric motor 22 is stopped and the second friction plates 30 of the remaining wind turbine drive devices 1 contact the corresponding first friction plates 29, thereby braking the rotation of the output shaft 22a. More specifically, if the zero-displacement state or the insufficient displacement state of the second friction plate 30 is detected in any of the wind turbine driving devices 1 when the electromagnet 32 is transitioned from a demagnetized state to an excited state, the electric motors 22 in all the wind turbine driving devices 1 are stopped and the electromagnets 32 are demagnetized. In other words, not only in the wind turbine driving device 1 in which the zero-displacement state or the insufficient displacement state occurs but also in all the wind turbine driving devices 1, a braking force is generated. Therefore when a malfunction of the second friction plate 30 occurs in any of the wind turbine driving devices 1, it is possible to prevent an external force of wind from working concentratedly on the output portion 25 of the wind turbine driving device 1 in which the malfunction of the second friction plate 30 occurs. In this way, it is possible to reliably prevent breakage of the ring gear 107 and the like in the wind turbine driving device 1 or in the wind turbine 101.

Furthermore, in the embodiment, when the wear amount of the first and second friction plates 29, 30 in any of the wind turbine driving devices 1 is equal to or larger than a predetermined value, the replacement-required command is transmitted to the upper-level control device 37. The replacement-required command notifies that replacement of the first and second friction plates 29, 30 in the wind turbine driving device 1 in which the wear amount of the first and second friction plates 29, 30 is equal to or more than the predetermined value is required. Therefore, the upper-level control device 37 can know the wind turbine driving device 1 in which the replacement of the first and second friction plates 29, 30 is required based on the replacement-required command transmitted by the control unit 11.

Further, in the embodiment, the detection target portion 33 is a permanent magnet and the detection portion 34 is a sensor that detects a magnetic force. Since the magnetic force sensor can quantitatively capture a change in the magnetic force with respect to the threshold value, the detection unit 34 which is a magnetic force sensor is used to more accurately detect a state of braking performed by the first friction plate 29 and the second friction plate 30.

Further, in the embodiment, a state of braking performed by the first and second friction plates (29, 30) is determined based on whether a current is applied to the electromagnet 32 (current applied state) and the detection value provided by the detector 34. In other words, the control unit 11 determines the braking state of the second friction plate 30 based on the information as to whether the electromagnet 32 is in the excitation or demagnetization state and the position of the second friction plate 30 detected by the detector 34. In this case, not only the distance between the first friction plate 29 and the second friction plate 30 is detected, but also a glitch can be detected. For example, it is possible to detect a failure that a current is applied to energize the electromagnet 32 but the first friction plate 29 and the second friction plate 30 are not separated from each other and the braking force is not lost. Moreover, it is possible to detect a failure that even though the electromagnet 32 is demagnetized, the first friction plate 29 and the second friction plate 30 remain separated from each other and no braking force is generated.

In addition, according to the embodiment, the detection target portion 33 and the detector 34 are configured such that the positional relationship (distance) between the detection target portion 33 and the detector 34 can be adjusted. Therefore it is possible to easily adjust the position (distance) between the detection target portion 33 and the detector 34.

### Variations

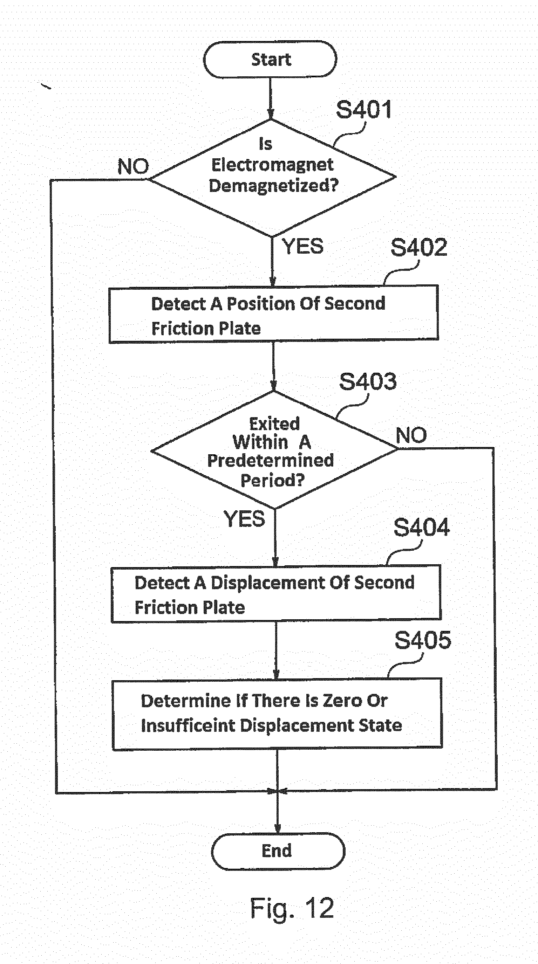

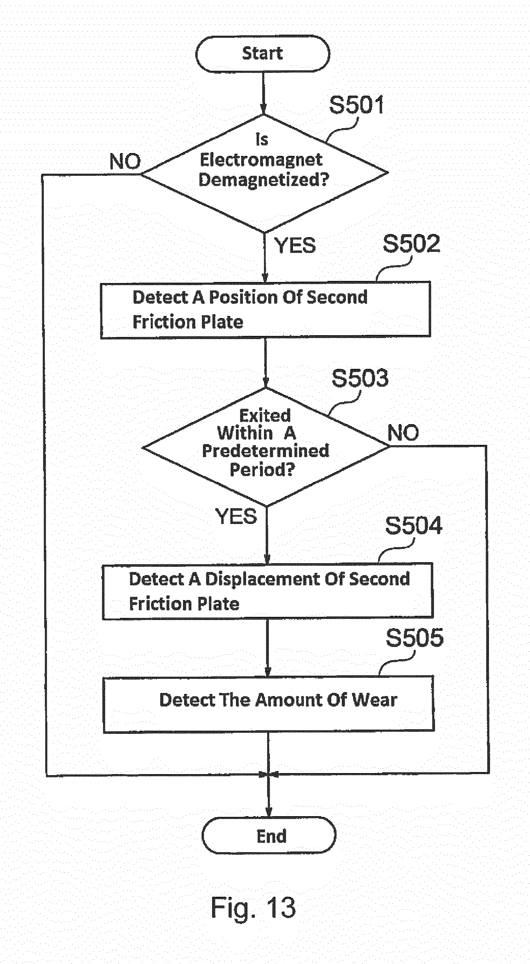

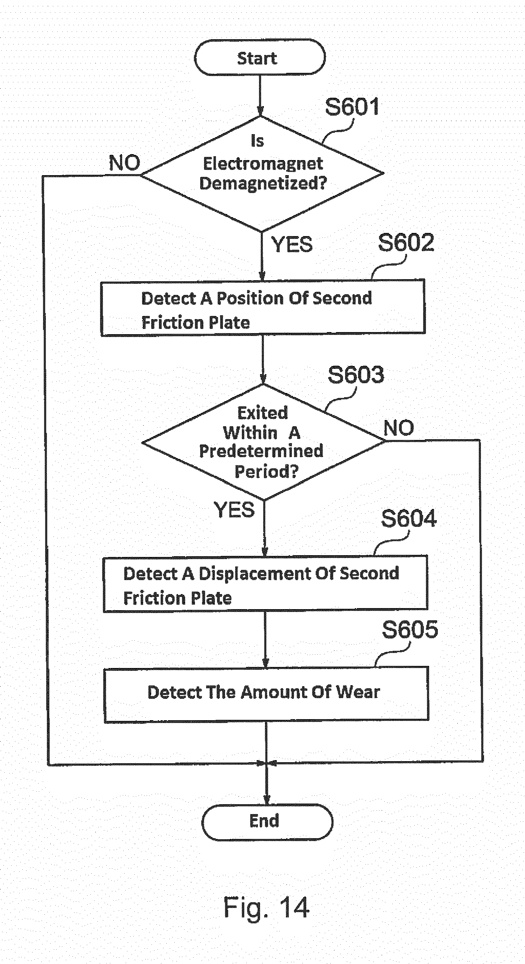

Although the embodiments of the invention have been described above, the invention is not restricted to the above-described embodiments, and various modifications are possible within the scope of the claims. For example, the following modifications are possible.
(1) In the above-described embodiment, permanent magnet is used as the detection target portion and the magnetic sensor is used as the detector. However, the detection target portion and the detector are not limited to these. More specifically, a detection unit including a detection target portion that is in the form of any member other than permanent magnet and fixed on the second friction plate, and a detector that is in the form of any member other than a magnetic sensor and configured to detect the position and displacement of the detection target portion moving along with the second friction plate may be used. A displacement sensor such as an optical sensor may be used as the detector. Alternatively, a detection unit that includes a coil and a case containing the coil as the detector, and a probe as the detection target portion may be used.
   In the latter case, the detector may be attached to the housing of the braking mechanism. The probe that is displaced relative to the detector may be fixed on the second friction plate and moves along with the second friction plate. Within the detector, a primary coil and a secondary coil may be provided. The probe has a moving core that is relatively displaced on the inner side of the coil in the detector. In this way, the detector is configured to detect the position and displacement of the detection target portion that is displaced along with the second friction plate. In this detector, a signal based on an induced voltage generated in the secondary coil in accordance with a position and displacement of the moving core of the probe may be generated when the primary coil is excited. Moreover, the detector may be coupled to the control unit that controls operations of the plurality of wind turbine driving devices. The above-mentioned signal is output to the control unit as a detection result of the position and displacement of the detection target portion. Even when the invention is implemented as the wind turbine driving device and the wind turbine driving device unit in which the detection target portion and detector of the above-described modification example are provided, the same advantageous effects as the above embodiment can be obtained.
(2) In the above-described embodiment, the detection target portion 33 is attached to the second friction plate 30 and the detector 34 is attached to the electric motor 22 has been described as an example. However, the invention is not limited to this, and the detector 34 may be attached to the second friction plate 30 and the detection target portion 33 may be attached to the electric motor 22. In this case, a mechanism for varying the distance between the detection target portion 33 and the detector 34 is provided on the electric motor 22, and the detection target portion 33 is moved relative to the detector 34, whereby the positional relationship between the detected portion 33 and the detector 34 can be adjusted.
(3) In the above embodiment, the detection unit 34, which is a magnetic force sensor, measures the intensity and direction of the magnetic field of the detection target portion 33, which is a permanent magnet, to detect the position and the displacement amount of the second friction plate 30. However, the invention is not limited this. The detection unit 34 may measure the intensity and direction of the magnetic field of the electromagnet 32 in addition to the intensity and direction of the magnetic field of the detection target portion 33. In this case, by combining, for example, a state of current application to the electromagnet 32 and the intensity of the magnetic field of the electromagnet 32, the excitation state of the electromagnet 32 can be detected, in addition to the braking state performed by the first and second friction plates (29, 30).
   When the detector 34 measures the intensity and direction of the magnetic field of the electromagnet 32, it is preferable that the direction of the magnetic flux density from the electromagnet 32 and the direction of the magnetic flux density from the detection target portion 33 which is a permanent magnet are opposite to each other. For example, the direction of the magnetic flux density from the electromagnet 32 may be oriented substantially downward (or substantially upward), and the direction of the magnetic flux density from the detection target portion 33 may be directed substantially upward (or substantially downward).
   In this case, it is possible to differentiate the state where the electromagnet 32 is excited and the first friction plate 29 and the second friction plate 30 are separated from each other to release braking (a braking released state) from the state where the electromagnet 32 is excited but the friction plate 29 and the second friction plate 30 contact each other and the braking force is not lost (a stuck state). More specifically, since the direction of the magnetic flux density from the electromagnet 32 is different from the direction of the magnetic flux density from the detection target portion 33, the magnetic fluxes enter from the different directions into the detector 34, which is a magnetic sensor. Consequently, a difference between a detection value provided by the detector 34 in the above-described braking released state and a detection value provided by the detector 34 in the stuck state described above becomes larger with reference to the state where the electromagnet 32 is not excited and the first friction plate 29 and the second friction plate 30 are brought into contact with each other to generate a braking force (the brake operating state). Therefore it is possible to more easily discern these states.
(4) In the above-described embodiment, the wind turbine driving device 1 is configured such that the operation of the second friction plate 30 is checked by detecting the position of the second friction plate 30 by the detector 34 when the electromagnet 32 is transitioned from a demagnetized state to an excited state. However, the way of detection is not limited to this. For example, the wind turbine driving device 1 may be configured such that the operation of the second friction plate 30 is checked by detecting the displacement amount of the second friction plate 30 by the detector 34 when the electromagnet 32 is transitioned from a demagnetized state to an excited state. Moreover, the wind turbine driving device unit that includes such wind turbine driving devices may be provided. Fig. 12 is a flow chart for describing a second friction plate operation check process in the modification example. The process shown in Fig. 12 is applied to the wind turbine driving device and the wind turbine driving device unit of the above-described modification example.
   The second friction plate operation check process shown in Fig. 12 is for example performed instead of the second friction plate operation check process (Step S101) shown in Fig. 9 described in the above embodiment. More specifically, in this modification example, the detection target portion 33, the detector 34, and the control unit 11 carry out the steps shown in Fig. 12 instead of the steps shown in Fig. 10. In the following description of the process of Fig. 12, the same reference numerals as those of the above-described embodiment are used for the similar steps and configurations as the above embodiment and those descriptions will be hereunder omitted.
   In the second friction plate operation check process of Fig. 12, firstly whether the electromagnet 32 is in a demagnetized state or not may be determined (Step S401). Step 401 is performed in the same manner as Step S201 of Fig. 10. When the electromagnet 32 is demagnetized (Step S401: Yes), the detector 34 detects a position of the second friction plate 30 based on a command from the control unit 11 (Step S402). A result of the detection may be received by the control unit 11 at the timing synchronized with a detection timing. After Step 402 is carried out, it is determined whether an excitation operation was performed within a predetermined period of time after Step S401 had been performed (Step S403). Step 403 is performed in the same manner as Step S202 of Fig. 10.
   When it is determined that an excitation operation was performed within the predetermined period of time after Step S401 had been performed (Step S403: Yes), the detector 34 detects a displacement of the second friction plate 30 in response to a command from the control unit 11 (Step S404). The displacement of the second friction plate detected at that time is detected as a displacement from the position of the second friction plate 30 detected in Step S402. A detection result of the displacement of the second friction plate 30 detected by the detector 34 is received by the control unit 11.
   After the displacement of the second friction plate 30 is detected, Step 405 is carried out. In Step S405, the control unit 11 may determine whether a zero-displacement state of the second friction plate 30 where the position of the second friction plate 30 is unchanged occurs or not based on the detected displacement of the second friction plate 30. In Step S405, the control unit 11 may determine whether an insufficient displacement state of the second friction plate 30 where the second friction plate 30 is not drawn to a predetermined position by the magnetic force of the electromagnet 32 occurs or not.
   When the first friction plate 29 and the second friction plate 30 that generate a braking force are stuck together, the above-mentioned zero-displacement state is detected. When the second friction plate 30 is separated from the first friction plate 29 but the second friction plate 20 is somehow engaged with other member and the second friction plate 30 is not displaced to an appropriate position, the above-mentioned insufficient displacement state is detected. In this manner, the control unit 11 checks the operation of the second friction plate 30 and detects malfunction of the second friction plate 30 by carrying out the process of Fig. 12. In the embodiment, the control unit 11 may be configured to check operation of the second friction plate 30 based on the displacement of the second friction plate 30 detected by the detector 34 to detect malfunction of the second friction plate 30 when the electromagnet 32 is transitioned from a demagnetized state to an excited state.
   In this modification example, a malfunction of the second friction plate 30 is also easily detected when the electromagnet 32 is transitioned from the demagnetized state to the excited state in the same manner as the above-described embodiment.
(5) In the above-described embodiment, the wind turbine driving device 1 is configured such that the position of the second friction plate 30 is detected by the detector 34 to detect the wear amount of at least the first friction plate 29 or the second friction plate 30 or both when the electromagnet 32 is in the demagnetized state. However, the way of detection is not limited to this. For example, the wind turbine driving device may be configured such that the wear amount of at least the first friction plate 29 or the second friction plate 30 or both is detected by detecting the displacement amount of the second friction plate 30 using the detector 34 when the electromagnet 32 is transitioned from the demagnetized state to the excited state, and the invention may also be implemented as the wind turbine driving device unit that includes such wind turbine driving devices. Fig. 13 is a flow chart for describing a wear amount detection process in such a modification example. The process shown in Fig. 13 is applied to the wind turbine driving device and the wind turbine driving device unit of the above-described modification example.
   The wear amount detection process shown in Fig. 13 is for example performed instead of the wear amount detection process (Step S104) shown in Fig. 9 described in the above embodiment. More specifically, in this modification example, the detection target portion 33, the detector 34, and the control unit 11 carry out the steps shown in Fig. 13 instead of the steps shown in Fig. 11. In the following description of the process of Fig. 13, the same reference numerals as those of the above-described embodiment or the above-described modification example are used for the similar steps and configurations as the above embodiment or modification example and those descriptions will be hereunder omitted.
   In the wear amount detection process of Fig. 13, firstly whether the electromagnet 32 is in a demagnetized state or not is determined (Step S501). Step 501 is performed in the same manner as Step S301 of Fig. 11. When the electromagnet 32 is demagnetized (Step S501: Yes), the detector 34 detects a position of the second friction plate 30 in response to a command from the control unit 11 (Step S502). A result of the detection may be received by the control unit 11 at the timing synchronized with a detection timing. After Step 502 is carried out, it is determined whether an excitation operation was performed within a predetermined period of time after Step S501 had been performed (Step S503). Step 503 is performed in the same manner as Step S202 of Fig. 10 or Step S403 of Fig. 12.
   When it is determined that an excitation operation was performed within the predetermined period of time after Step S501 had been performed (Step S503: Yes), the detector 34 detects a displacement of the second friction plate 30 in response to a command from the control unit 11 (Step S504). The displacement of the second friction plate detected at that time is detected as a displacement from the position of the second friction plate 30 detected in Step S502. A detection result of the displacement of the second friction plate 30 detected by the detector 34 is received by the control unit 11.
   After the displacement of the second friction plate 30 is detected, Step 505 is carried out. In Step S505, the control unit 11 detects the amount of wear of the first friction plate 29 and the second friction plate 30 based on the detected displacement of the second friction plate 30.
   If the first friction plate 29 and/or the second friction plate 30 is worn, the displacement of the second friction plate 30 that occurs when the electromagnet 32 is transitioned from a demagnetized state to an excited state changes in accordance with the amount of wear. More specifically, when the wear of the friction plate advances, the displacement of the second friction plate 30 that occurs when the electromagnet 32 is transitioned from a demagnetized state to an excited state is increased from the corresponding displacement at a time when the second friction plate 30 was initially disposed. The control unit 11 calculates an increase in the displacement from the original displacement measured when the second friction plate was initially disposed based on the detection result of the displacement of the second friction plate 30, and detects the wear amount of the first friction plate 29 and the second friction plate 30 from the calculated increase.
   In this modification example, it is possible to easily know the wear amount of the first and second friction plates 29, 30 when the electromagnet 32 is transitioned from the demagnetized state to the excited state. In the wind turbine driving device and the wind turbine driving device unit according to the modification example, the second friction plate operation check process same as the above embodiment may also be performed. Therefore a malfunction of the second friction plate 30 can be easily detected when the electromagnet 32 is transitioned from the demagnetized state to the excited state.
(6) As another modification example other than the above-described modification example, the wind turbine driving device may be configured such that the wear amount of at least the first friction plate 29 or the second friction plate 30 or both is detected by detecting the displacement amount of the second friction plate 30 using the detector 34 when the electromagnet 32 is transitioned from the excited state to the demagnetized state, and the invention may also be implemented as the wind turbine driving device unit that includes such wind turbine driving devices. Fig. 14 is a flow chart for describing a wear amount detection process in such a modification example. The process shown in Fig. 14 is applied to the wind turbine driving device and the wind turbine driving device unit of the above-described modification example.
   The wear amount detection process shown in Fig. 14 is for example performed instead of the wear amount detection process (Step S104) shown in Fig. 9 described in the above embodiment. More specifically, in this modification example, the detection target portion 33, the detector 34, and the control unit 11 carry out the steps shown in Fig. 14 instead of the steps shown in Fig. 11. In the following description of the process of Fig. 14, the same reference numerals as those of the above-described embodiment or the above-described modification example are used for the similar steps and configurations as the above embodiment or modification example and those descriptions will be hereunder omitted.
   In the wear amount detection process of Fig. 14, firstly whether the electromagnet 32 is in an excited state or not is determined (Step S601). When the electromagnet 32 is in a demagnetized state (Step S601: No), the wear amount detection process of Fig. 11 may be temporarily ended. When the electromagnet 32 is excited (Step S601: Yes), the detector 34 detects a position of the second friction plate 30 in response to a command from the control unit 11 (Step S602). A result of the detection may be received by the control unit 11 at the timing synchronized with a detection timing. After Step 602 is carried out, it is determined whether a demagnetization operation was performed within a predetermined period of time after Step S601 had been performed (Step S603). When the control unit 11 issued a command to demagnetize the electromagnet 32 within the predetermined period of time after Step S601 had been performed, it is determined that the demagnetization was performed in the predetermined period of time.
   When it is determined that the demagnetization operation was performed within the predetermined period of time after Step S601 had been performed (Step S603: Yes), the detector 34 detects a displacement of the second friction plate 30 in response to a command from the control unit 11 (Step S604). The displacement of the second friction plate detected at that time is detected as a displacement from the position of the second friction plate 30 detected in Step S602. A detection result of the displacement of the second friction plate 30 detected by the detector 34 is received by the control unit 11.
   After the displacement of the second friction plate 30 is detected, Step 605 is carried out. In Step S605, the control unit 11 detects the amount of wear of the first friction plate 29 and the second friction plate 30 based on the detected displacement of the second friction plate 30. The control unit 11 calculates an increase in the displacement from the original displacement measured when the second friction plate was initially disposed based on the detection result of the displacement of the second friction plate 30, and detects the wear amount of the first friction plate 29 and the second friction plate 30 from the calculated increase.
   In this modification example, the wear amount of the first and second friction plates 29, 30 is easily known when the electromagnet 32 is transitioned from the excited state to the demagnetized state. In the wind turbine driving device and the wind turbine driving device unit according to the modification example, the second friction plate operation check process same as the above embodiment may also be performed. Therefore a malfunction of the second friction plate can be easily detected when the electromagnet 32 is transitioned from the demagnetized state to the excited state.
(7) In the above-described embodiment, the wind turbine driving device is used as a yaw driving device. However, the invention is not limited to this. The invention may be implemented as a wind turbine driving device that drives blades configured to be rockable in a pitch direction with respect to a rotor attached to the nacelle, and as a wind turbine driving device unit that includes a plurality of such wind turbine driving devices.

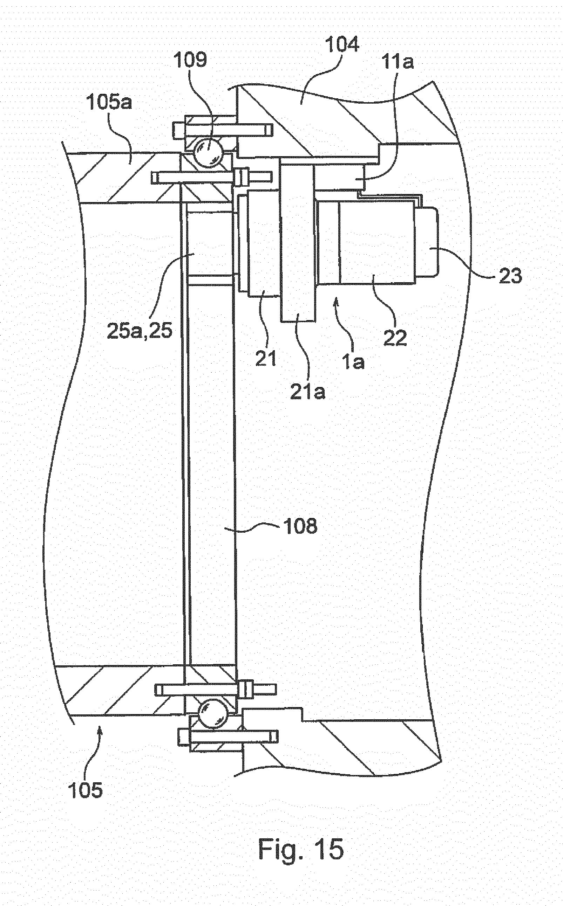

Fig. 15 is an enlarged sectional view of a portion where a blade 105 is attached to a rotor 104 of the wind turbine 101 provided rockably in a pitch direction to illustrate a wind turbine driving device 1a that serves as a pitch driving device. In the following description, the same reference numerals as those of the above-described embodiment are used for the similar components as the above embodiment and those descriptions will be hereunder omitted.

The wind turbine driving device 1a illustrated in Fig. 15 may be configured in the same manner as the wind turbine driving device 1 of the above embodiment. More specifically, the wind turbine driving device 1a may include the body 21, the electric motor 22, the braking mechanism 23, the speed reducer 24 and the output portion 25 that are configured similarly as those in the wind turbine driving device 1. The profile of the body 21 of the wind turbine driving device 1a is partially different from that of the body 21 of the wind turbine driving device 1.

The wind turbine driving device 1a is provided as a pitch driving device and may be attached to the rotor 104 at the position where the blade 105 is coupled to the rotor 104. An opening is formed in the rotor 104 where the blade 105 is coupled and blades 105 are partially disposed in the opening such that an end portion of a shaft portion 105a of the blade 105 faces to each other. Each blade 105 is supported at the shaft portion 105a by the rotor 105 via a bearing 109 and is configured to be rockable relative to the rotor 104 in a pitch direction (in a rotational direction centering on the shaft center of the shaft portion 105a of the blade 105). At the end of the shaft portion 105a where the rotor 104 is attached, a ring gear 108 that has an internal tooth arranged along the inner periphery is provided (note that the inner tooth of the ring gear 108 is not shown in Fig. 15). The ring gear 108 may be disposed such that its center coincides with the shaft center of the shaft portion 105a.

The wind turbine driving device 1a is disposed on the rotor 104 such that the pinion 25a provided on the output portion 25 meshes with the ring gear 108 provided in the wind turbine 101. An attachment flange 21a that is attached and fixed to the rotor 104 may be provided on the body 21 of the wind turbine driving device 1a.

The wind turbine driving device 1a is configured to operate based on control performed by a control unit 11a that is configured similarly to the control unit 11 of the above embodiment. For example, in the same manner as the above embodiment, the control unit 11a may be configured to check operation of the second friction plate 30 based on the position of the second friction plate 30 detected by the detector 34 when the electromagnet 32 is transitioned from a demagnetized state to an excited state. Therefore in the wind turbine driving device 1a, the operation of the second friction plate 30 can be checked by detecting the position of the second friction plate 30 using the detector 34 when the electromagnet 32 is transitioned from the demagnetized state to the excited state.

Moreover, in the same manner as the above embodiment, the control unit 11a may be configured to detect the amount of wear of at least the first friction plate 29 or the second friction plate 30 based on the position of the second friction plate 30 detected by the detector 34 when the electromagnet 32 is in the demagnetized state. Therefore the wind turbine driving device 1a is configured such that the amount of wear of at least the first friction plate 29 or the second friction plate 30 or both is detected by detecting the position of the second friction plate 30 using the detector 34 when the electromagnet 32 is in the demagnetized state.

## Claims

1. A wind turbine driving device (1) for rotationally driving a movable part (103) of a wind turbine (101), comprising:
a motor (22) having an output shaft (22a);
a pinion (25a) meshing with a gear (107) provided in the movable part (103);
a speed reducer (24) coupled to the output shaft (22a) of the motor (22) and the pinion (25a) to reduce a speed of the motor (22) to transmit a reduced driving force to the pinion (25a);
a first friction plate (29) coupled to the output shaft (22a) of the motor (22);
a second friction plate (30) disposed so as to be contactable with the first friction plate (29) and to generate a braking force to stop rotation of the output shaft (22a) by contacting the first friction plate (29); and
a detection unit (40) detecting a position of the second friction plate (30),
wherein the detection unit (40) includes a detection target portion (33) and a detector (34) that detects the detection target portion (33) in order to detect the position of the second friction plate (30), and
wherein one of the detection target portion (33) and the detector (34) is attached to the second friction plate (30), and the other of the detection target portion (33) and the detector (40) is attached to the motor (22).

2. The wind turbine driving device (1) of claim 1, wherein
the detection target portion (33) is a permanent magnet and the detector (34) is a magnetic force sensor.

3. The wind turbine driving device (1) of claim 1, further comprising an electromagnet (32) for changing a distance between the first friction plate (29) and the second friction plate (30) by moving the second friction plate (30),
wherein a state of braking performed by the first friction plate (29) and the second friction plate (30) is detected based on whether there is a current supplied to the electromagnet (32) and a detection result provided by the detector (34).

4. The wind turbine driving device (1) of claim 1, wherein
the detection target portion (33) and the detector (34) are provided such that a positional relationship between the detection target portion (33) and the detector (34) is adjustable.

5. A wind turbine driving device unit (10) that includes a gear (108) for rotationally driving a movable part (103) of a wind turbine (101) and the wind turbine driving device (1) of claim 1, wherein
a plurality of the wind turbine driving devices (1) are provided, the plurality of the wind turbine driving devices (1) mesh with the gear (108), and the movable part (103) is rotationally driven by synchronously driving the motors (22) of the plurality of the wind turbine driving devices (1).

6. The wind turbine driving device unit (10) of claim 5, wherein
when at least one braking state of one wind turbine drive device (1) indicates an abnormality, the second friction plate (30) in the remaining wind turbine drive devices (1) contacts the corresponding first friction plate (29) to put a brake on the rotation of the output shaft (22a).

## Patentansprüche

1. Windturbinen-Antriebsvorrichtung (1) zum drehenden Antreiben eines beweglichen Teils (103) einer Windturbine (101), umfassend:
einen Motor (22) mit einer Abtriebswelle (22a);
ein Ritzel (25a) im Eingriff mit einem im beweglichen Teil (103) angeordneten Zahnrad (107);
ein mit der Abtriebswelle (22a) des Motors (22) und dem Ritzel (25a) gekoppeltes Untersetzungsgetriebe (24) zum Verkleinern einer Übersetzung des Motors (22) zum Übertragen einer verringerten Antriebskraft auf das Ritzel (25a);
eine mit der Abtriebswelle (22a) des Motors (22) gekoppelte erste Reibplatte (29);
eine zweite Reibplatte (30), die so angeordnet ist, dass sie in Kontakt mit der ersten Reibplatte (29) gebracht werden und eine Bremskraft zum Stoppen der Drehung der Abtriebswelle (22a) durch Kontakt mit der ersten Reibplatte (29) erzeugen kann; und
eine eine Position der zweiten Reibplatte (30) erfassende Erfassungseinheit (40),
wobei die Erfassungseinheit (40) einen Erfassungszielabschnitt (33) und einen Detektor (34), der den Erfassungszielabschnitt (33) erfasst, zum Erfassen der Position der zweiten Reibplatte (30) umfasst, und
wobei ein Element der Gruppe umfassend den Erfassungszielabschnitt (33) und den Detektor (34) an der zweiten Reibplatte (30) befestigt ist und das andere Element der Gruppe umfassend den Erfassungszielabschnitt (33) und den Detektor (40) am Motor (22) befestigt ist.

2. Windturbinen-Antriebsvorrichtung (1) nach Anspruch 1, wobei
der Erfassungszielabschnitt (33) ein Dauermagnet ist und der Detektor (34) ein Magnetkraftsensor ist.

3. Windturbinen-Antriebsvorrichtung (1) nach Anspruch 1, ferner umfassend einen Elektromagneten (32) zum Ändern eines Abstands zwischen der ersten Reibplatte (29) und der zweiten Reibplatte (30) durch Bewegen der zweiten Reibplatte (30),
wobei ein Zustand des von der ersten Reibplatte (29) und der zweiten Reibplatte (30) durchgeführten Bremsens auf der Basis dessen erfasst wird, ob ein Strom zum Elektromagneten (32) geliefert wird und ein Erfassungsergebnis vom Detektor (34) bereitgestellt wird.

4. Windturbinen-Antriebsvorrichtung (1) nach Anspruch 1, wobei
der Erfassungszielabschnitt (33) und der Detektor (34) so angeordnet sind, dass eine Positionsbeziehung zwischen dem Erfassungszielabschnitt (33) und dem Detektor (34) verstellbar ist.

5. Windturbinen-Antriebsvorrichtungseinheit (10), die ein Zahnrad (108) zum drehenden Antreiben eines beweglichen Teils (103) einer Windturbine (101) und die Windturbinen-Antriebsvorrichtung (1) nach Anspruch 1 umfasst, wobei
eine Vielzahl der Windturbinen-Antriebsvorrichtungen (1) angeordnet ist, die Vielzahl der Windturbinen-Antriebsvorrichtungen (1) im Eingriff mit dem Zahnrad (108) steht und der bewegliche Teil (103) durch synchrones Antreiben der Motoren (22) der Vielzahl der Windturbinen-Antriebsvorrichtungen (1) drehend angetrieben wird.

6. Windturbinen-Antriebsvorrichtungseinheit (10) nach Anspruch 5, wobei
wenn wenigstens ein Bremszustand von einer Windturbinen-Antriebsvorrichtung (1) einen anormalen Zustand anzeigt, die zweite Reibplatte (30) in den restlichen Windturbinen-Antriebsvorrichtungen (1) in Kontakt mit der entsprechenden ersten Reibplatte (29) tritt, um eine Bremsung der Drehung der Abtriebswelle (22a) zu bewirken.

## Revendications

1. Dispositif d'entraînement d'éolienne (1) pour entraîner en rotation une partie mobile (103) d'une éolienne (101), comprenant :
un moteur (22) ayant un arbre de sortie (22a) ;
un pignon (25a) s'engrenant avec un engrenage (107) prévu dans la partie mobile (103) ;
un réducteur de vitesse (24) couplé à l'arbre de sortie (22a) du moteur (22) et au pignon (25a) pour réduire une vitesse du moteur (22) afin de transmettre une force d'entraînement réduite au pignon (25a) ;
une première plaque de friction (29) couplée à l'arbre de sortie (22a) du moteur (22) ;
une deuxième plaque de friction (30) disposée de manière à pouvoir venir en contact avec la première plaque de friction (29) et à générer une force de freinage pour arrêter la rotation de l'arbre de sortie (22a) en venant en contact avec la première plaque de friction (29) ; et
une unité de détection (40) détectant une position de la deuxième plaque de friction (30),
dans lequel l'unité de détection (40) comporte une partie cible de détection (33) et un détecteur (34) qui détecte la partie cible de détection (33) afin de détecter la position de la deuxième plaque de friction (30), et
dans lequel l'un(e) de la partie cible de détection (33) et du détecteur (34) est fixé(e) à la deuxième plaque de friction (30), et l'autre de la partie cible de détection (33) et du détecteur (40) est fixé(e) au moteur (22).

2. Dispositif d'entraînement d'éolienne (1) de la revendication 1, dans lequel
la partie cible de détection (33) est un aimant permanent et le détecteur (34) est un capteur de force magnétique.

3. Dispositif d'entraînement d'éolienne (1) de la revendication 1, comprenant en outre un électroaimant (32) pour changer une distance entre la première plaque de friction (29) et la deuxième plaque de friction (30) en déplaçant la deuxième plaque de friction (30),
dans lequel un état de freinage effectué par la première plaque de friction (29) et la deuxième plaque de friction (30) est détecté sur la base de la présence d'un courant fourni à l'électroaimant (32) et d'un résultat de détection fourni par le détecteur (34).

4. Dispositif d'entraînement d'éolienne (1) de la revendication 1, dans lequel
la partie cible de détection (33) et le détecteur (34) sont prévus de sorte qu'une relation de position entre la partie cible de détection (33) et le détecteur (34) soit réglable.

5. Unité de dispositif d'entraînement d'éolienne (10) qui comporte un engrenage (108) pour entraîner en rotation une partie mobile (103) d'une éolienne (101) et le dispositif d'entraînement d'éolienne (1) de la revendication 1, dans laquelle
une pluralité de dispositifs d'entraînement d'éolienne (1) sont prévus, la pluralité de dispositifs d'entraînement d'éolienne (1) s'engrènent avec l'engrenage (108) et la partie mobile (103) est entraînée en rotation par entraînement synchrone des moteurs (22) de la pluralité de dispositifs d'entraînement d'éolienne (1).

6. Unité de dispositif d'entraînement d'éolienne (10) de la revendication 5, dans laquelle
lorsqu'au moins un état de freinage d'un dispositif d'entraînement d'éolienne (1) indique une anomalie, la deuxième plaque de friction (30) dans les dispositifs d'entraînement d'éolienne restants (1) vient en contact avec la première plaque de friction correspondante (29) pour freiner la rotation de l'arbre de sortie (22a).
